# EUROPÄISCHE PATENTSCHRIFT

(11) **EP 1 039 269 B1**
(45) Veröffentlichungstag und Bekanntmachung des Hinweises auf die Patenterteilung: **12.11.2008**
(21) Anmeldenummer: 99105159.0
(22) Anmeldetag: 26.03.1999
(51) Int. Cl.: G01F 1/58

(54) **Verfahren zur Herstellung eines magnetisch-induktiven Durchflussaufnehmers**
Method of manufacturing an electromagnetic flow sensor
Procédé de fabrication d'un capteur électromagnétique de débit

(43) Veröffentlichungstag der Anmeldung: 27.09.2000
(60) Teilanmeldung: 08163861.1
(73) Patentinhaber: Endress + Hauser Flowtec AG, 4153 Reinach BL 1 (CH)
(72) Erfinder: Frey, Daniel, 4410 Liestal (CH); Magliocca, Antonio, 4056 Basel (CH)
(74) Vertreter: Andres, Angelika Maria

(56) Entgegenhaltungen:
- GB-A- 2 118 477
- US-A- 4 470 309
- US-A- 4 804 207

## Beschreibung

Die Erfindung betrifft ein Verfahren zum Herstellen eines magnetisch-induktiven Durchflußaufnehmers.

Mittels magnetisch-induktiven Durchflußaufnehmer läßt sich bekanntlich der Volumendurchfluß eines elektrisch leitfähigen Fluids messen, das ein Meßrohr dieses Durchflußaufnehmers gerichtet durchströmt. Hierzu wird am Durchflußaufnehmer mittels einer an eine Erreger-Elektronik angekoppelten Magnetkreisanordnung ein Magnetfeld von möglichst hoher Dichte erzeugt, das das Fluid innerhalb eines Meßvolumens abschnittsweise, insb. im Bereich mit hoher Strömungsgeschwindigkeit, senkrecht zu dessen Strömungsrichtung durchsetzt und das sich im wesentlichen außerhalb des Fluids schließt. Das Meßrohr besteht daher aus nicht-ferromagnetischem Material, damit das Magnetfeld beim Messen nicht ungünstig beeinflußt wird.

Aufgrund der Bewegung der freien Ladungsträger des Fluids im Magnetfeld wird nach dem magneto-hydrodynamischen Prinzip im Meßvolumen ein elektrisches Feld bestimmter Stärke erzeugt, das senkrecht zum Magnetfeld und senkrecht zur Strömungsrichtung des Fluids verläuft. Mittels zweier in Richtung des elektrischen Feldes voneinander beabstandet angeordneter Elektroden und mittels einer an diese angeschlossenen Auswerte-Elektronik ist somit eine im Fluid induzierte elektrische Spannung meßbar. Diese Spannung ist ein Maß für den Volumendurchfluß. Zum Abgreifen der induzierten Spannung dienen entweder das Fluid berührende, galvanische oder das Fluid nicht berührende, kapazitive Elektroden.

Der Durchflußaufnehmer ist so aufgebaut, daß sich das induzierte elektrische Feld außerhalb des Fluids praktisch nur über die an die Elektroden angeschlossene Auswerte-Elektronik schließt.

Zum Führen und wirksamen Einkoppeln des Magnetfeldes in das Meßvolumen umfaßt die Magnetkreisanordnung üblicherweise zwei Spulenkerne, die entlang eines Umfanges des Meßrohrs insb. diametral, voneinander beabstandet und mit jeweils einer freien endseitigen Stirnfläche, insb. spiegelbildlich, zueinander angeordnet sind.

In die Spulenkerne wird mittels einer an die Erreger-Elektronik angeschlossener Spulenanordnung das Magnetfeld so eingekoppelt, daß es das zwischen beiden Stirnflächen hindurchströmende Fluid wenigstens abschnittsweise senkrecht zur Strömungsrichtung durchsetzt.

Aufgrund der geforderten hohen mechanischen Stabilität für solche Meßrohre, bestehen diese bevorzugt aus einem äußeren, insb. metallischen, Trägerrohr von vorgebbarer Festigkeit und Weite, das innen mit einem elektrisch nichtleitenden Isoliermaterial von vorgebbarer Dicke, dem sogenannten Liner, beschichtet ist.

So ist in der US-A 32 13 685 oder der EP-A 581 017 jeweils ein magnetisch-induktiver Durchflußaufnehmer beschrieben, der umfaßt:
- ein in eine Rohrleitung druckdicht einfügbares, ein einlaßseitiges erstes Ende und ein auslaßseitiges zweites Ende aufweisendes Meßrohr, das
   -- ein nicht-ferromagnetisches Trägerrohr als eine äußere Umhüllung des Meßrohrs,
   -- einen in einem Lumen des Trägerrohrs untergebrachten, aus einem Isoliermaterial bestehenden rohrförmigen Liner zum Führen eines strömenden und vom Trägerrohr isolierten Fluids und
   -- einen zur Stabilisierung des Liners in diesen eingebetteten Stützkörper enthält,
- eine am Meßrohr angeordnete Magnetkreisanordnung zum Erzeugen und Führen eines magnetischen Feldes, das im strömenden Fluid ein elektrisches Feld induziert und
- eine erste Elektrode und eine zweite Elektrode für das Abgreifen einer Spannung vom elektrischen Feld.

Der in der EP-A-0 581 017 gezeigte Stützkörper ist durch Sintern von Metall-, Keramik- oder Glaskügelchen gefertigt.

Der Liner dient der chemischen Isolierung des Trägerrohrs vom Fluid. Bei Trägerrohren von hoher elektrischer Leitfähigkeit, insb. bei metallischen Trägerrohren, dient der Liner außerdem als elektrische Isolierung zwischen dem Trägerrohr und dem Fluid, die ein Kurzschließen des elektrischen Feldes über das Trägerrohr verhindert.

Durch eine entsprechende Auslegung des Trägerrohrs ist somit eine Anpassung der Festigkeit des Meßrohrs an die im jeweiligen Einsatzfall vorliegenden mechanischen Beanspruchungen realisierbar, während mittels des Liners eine Anpassung des Meßrohr an die für den jeweiligen Einsatzfall geltenden chemischen, insb. hygienischen, Anforderungen realisierbar ist.

Der Liner, der aus einem Kunststoff als Isoliermaterial besteht, wird üblicherweise mit einem darin vollständig eingebetteten, offenporigen, insb. metallischen, Stützkörper hergestellt. Dieser dient dazu, den Liner, insb. gegenüber Druckänderungen und thermisch bedingten Volumenänderungen, mechanisch zu stabilisieren. So ist z.B. in der JP-Y 53 - 51 181 ein rohrförmiger Stützkörper gezeigt, in dessen Mantelflächen Bohrungen eingebracht sind. Dieser Stützkörper ist im Meßrohr mit diesem fluchtend eingebracht und vom Isoliermaterial vollständig umschlossen.

Zur Optimierung der Dichte des Magnetfeldes und damit zur Verbesserung der Empfindlichkeit des Durchflußaufnehmers sind die Stirnflächen der Spulenkerne als Polschuhe mit möglichst großer Fläche und mit bestimmter Wölbung ausgeführt. Durch geeignete Ausformung dieser Wölbung kann so die Dichte des Magnetfeldes im Meßvolumen gezielt optimiert werden. Dadurch wird auch das räumliche elektrische Feld und somit die Abhängigkeit der im Fluid induzierten Spannung von dessen Strömungsgeschwindigkeit optimiert.

Die räumliche Ausbildung des Magnetfeldes im Fluid und damit auch die Genauigkeit des Durchflußaufnehmers werden neben der räumlichen Gestalt der beiden Stirnflächen u.a. auch durch deren gegenseitigen Abstand bestimmt. Je weiter die Stirnflächen voneinander entfernt angeordnet sind, desto schwächer bildet sich das elektrische Feld aus und desto höher wird die Empfindlichkeit der gemessenen Spannung gegenüber Störungen, z.B. Änderungen im Strömungsverhalten oder Temperaturschwankungen im Fluid.

Zur Erhöhung der Genauigkeit des Durchflußaufnehmers sind daher die Stirnflächen einerseits minimal voneinander zu beabstanden und andererseits ist deren Wölbung möglichst genau der jeweils optimalen anzupassen. Bei handelsüblichen Durchflußaufnehmern werden daher die Polschuhe so ausgeführt und am Meßrohr angeordnet, daß deren Stirnflächen direkt auf dem Liner aufliegen und dabei im wesentlichen entsprechend dessen äußerer Kontur geformt sind, vgl. z.B. die US-A 48 25 703.

In der US-A 56 64 315 ist ein Verfahren zum Herstellen eines Meßrohrs eines magnetisch-induktiven Durchflußaufnehmers, das innen einen Liner aufweist, beschrieben, bei dem vor dem Einbringen des Liners in das Trägerrohr ein den Liner mechanisch stabilisierendes Streckmetall-Gitter als vorgefertigter Stützkörper angebracht wird. Das Einbringen des Liners erfolgt durch Einfüllen und Erstarrenlassen eines verflüssigten Isoliermaterials in das Meßrohr, das den Stützkörper nach dem Erstarren umschließt und so den Liner bildet. Bevorzugt werden zur Fertigung des Liners Injection-Molding- oder Transfer-Molding-Verfahren angewendet.

Es ist jedoch auch üblich, einen vollständig vorgefertigten Liner in das Trägerrohr einzusetzen. So ist in der JP-A 59 - 137 822 ein Verfahren gezeigt, bei dem der Liner durch Aufweichen einer äußeren und einer inneren, einen rohrförmigen porösen Stützkörper aus Edel-Stahl umschließenden Kunststoffolie gebildet wird.

Es hat sich zwar einerseits gezeigt, daß Liner der beschriebenen Art im Betrieb eine sehr hohe mechanische Langzeitstabilität, auch in Temperaturbereichen von -40°C bis zu 200 °C bei entsprechenden Temperatursprüngen besitzen, andererseits aber ist das Einbringen eines separat gefertigten Stützkörpers in das und dessen Arretieren im Tägerrohr mit einem sehr hohen Fertigungsaufwand verbunden. Dies umso mehr, je höher die Anforderungen an die Paßgenauigkeit des Stützkörpers im Trägerrohr sind.

Es hat sich ferner gezeigt, daß mit der Anordnung der Spulenkerne auf dem Liner, insb. bei einem großen Verhältnis der Weite des Trägerrohrs zur Weite des Stützkörpers bzw. des Liners und bei kleiner Strömungsgeschwindigkeit des Fluids, erhöhte Meßfehler auftreten können.

Eine Aufgabe der Erfindung besteht daher darin, ein Verfahren zum Herstellen des Liners eines magnetisch-induktiven Durchflußaufnehmers mit eingebettetem Stützkörper anzugeben, das den Fertigungsaufwand reduziert.

Zur Lösung der Aufgabe besteht die Erfindung in einem Verfahren zum Herstellen eines ein einlaßseitiges erstes offenes Ende und ein auslaßseitiges zweites offenes Ende aufweisenden Meßrohrs für einen magnetisch-induktiven Durchflußaufnehmer, welches Meßrohr umfaßt:
- ein nicht-ferromagnetisches Trägerrohr,
- einen in einem Lumen des Trägerrohrs untergebrachten, aus einem Isoliermaterial bestehenden rohrförmigen Liner und
- einen in den Liner eingebetteten offenporigen Stützkörper,
welches Verfahren folgende Schritte umfaßt:
- das Trägerrohr wird vorgefertigt,
- ein erster Sinterraum wird im Lumen des Trägerrohrs dadurch gebildet, daß
   -- ein erster Sinter-Dorn mit einem kleinsten Durchmesser, der größer als eine kleinste Weite des Liners ist, in das Lumen des Trägerrohrs eingesetzt und dort temporär fixiert und
   -- das Trägerrohr sinterdicht bis auf mindestens eine erste Einfüll-Öffnung für ein körniges erstes Sinterausgangsmaterial verschlossen wird,
- der Stützkörper wird direkt im Lumen des Trägerrohrs paßförmig dadurch gebildet, daß
   -- das erste Sinterausgangsmaterial in den ersten Sinterraum eingefüllt,
   -- das erste Sinterausgangsmaterial im Sinterraum gesintert und
   -- der erste Sinter-Dorn entfernt wird,
- ein Gießraum wird im Lumen des Trägerrohrs dadurch gebildet, daß
   -- ein Gieß-Dorn mit einem kleinsten Durchmesser, der höchstens gleich dem kleinsten Durchmesser des Liners ist, im Lumen des Trägerrohrs temporär fixiert und
   -- das Trägerrohr gießdicht bis auf mindestens eine Eingieß-Öffnung für ein verflüssigtes Isoliermaterial verschlossen wird, und
- der Liner wird direkt im Lumen des Trägerrohrs dadurch gebildet, daß das verflüssigte Isoliermaterial
   -- in den Gießraum eingefüllt,
   -- in den Stützkörper eindringen gelassen und
   -- im Lumen des Trägerrohrs erstarren gelassen wird.

Nach einer ersten Ausgestaltung des Verfahrens der Erfindung wird
- nach dem Sintern des Stützkörpers und vor dem Einsetzen des ersten Gieß-Dorns ein zweiter Sinter-Dorn mit einem kleinsten Durchmesser, der größer als die kleinste Weite des Liners ist, in das Lumen des Trägerrohrs eingesetzt und dort so temporär fixiert, daß ein zweiter Sinterraum gebildet wird,
- das Trägerrohr sinterdicht bis auf mindestens eine Einfüll-Öffnung für ein körniges zweites Sinterausgangsmaterial verschlossen,
- in den zweiten Sinterraum das zweite Sinterausgangsmaterial eingefüllt,
- das zweite Sinterausgangsmaterial gesintert und somit der Stützkörper im Lumen des Trägerrohrs wenigstens abschnittsweise vergrößert, und
- der zweite Sinter-Dorn durch den Gieß-Dorn ersetzt.

Nach einer zweiten Ausgestaltung des Verfahrens der Erfindung
- werden vor dem Einsetzen des ersten Sinter-Dorns
   -- eine erste Aufweitung stirnseitig in das einlaßseitige erste Ende des Trägerrohrs und
   -- eine zweite Aufweitung stirnseitig in das auslaßseitige zweite Ende des Trägerrohrs eingebracht und
- wird das Trägerrohr vor dem Einfüllen des ersten Sinterausgangsmaterials so verschlossen, daß nach dem Sintern der Stützkörper die erste und die zweite Aufweitung wenigstens teilweise ausfüllt.

Nach einer dritten Ausgestaltung des Verfahrens der Erfindung werden die erste und die zweite Aufweitung nach innen sich trichterförmig verjüngend ausgebildet.

Nach einer vierten Ausgestaltung des Verfahrens der Erfindung
- wird vor dem Einsetzen des ersten Sinter-Dorns das Trägerrohr
   -- mit einer ersten Mantel-Öffnung für das Einsetzen eines eine endseitige erste Stirnfläche aufweisenden ferromagnetischen ersten Spulenkerns und
   -- mit einer zweiten Mantel-Öffnung für das Einsetzen eines eine endseitige zweite Stirnfläche aufweisenden ferromagnetischen zweiten Spulenkerns versehen und
- werden vor dem Einfüllen des ersten
   Sinterausgangsmaterials in den ersten Sinterraum die erste Mantel-Öffnung temporär mittels eines ersten Sinterverschlusses und die zweite Mantel-Öffnung temporär mittels eines zweiten Sinterverschlusses jeweils sinterdicht verschlossen.

Nach einer fünften Ausgestaltung des Verfahrens der Erfindung werden zum sinterdichten Verschließen der ersten und zweiten Mantel-Öffnung Sinterverschlüsse verwendet, die so geformt sind, daß der Stützkörper nach dem Sintern beide Mantel-Öffnungen wenigstens teilweise ausfüllt.

Nach einer sechsten Ausgestaltung des Verfahrens der Erfindung werden zum sinterdichten Verschließen der ersten und zweiten Mantel-Öffnung Sinterverschlüsse verwendet, die jeweils so geformt sind, daß nach dem Sintern
- ein von der ersten Mantel-Öffnung ausgehender erster Spulenkern-Sitz für das Einsetzen eines von der ersten Stirnfläche des ersten Spulenkerns ausgehenden, endseitigen ersten Spulenkern-Abschnittes und
- ein von der zweiten Mantel-Öffnung ausgehender zweiter Spulenkern-Sitz für das Einsetzen eines von der zweiten Stirnfläche des zweiten Spulenkerns ausgehenden, endseitigen zweiten Spulenkern-Abschnittes im Stützkörper eingeformt sind.

Nach einer siebenten Ausgestaltung des Verfahrens der Erfindung werden zum sinterdichten Verschließen der ersten und zweiten Mantel-Öffnung Sinterverschlüsse verwendet, in die jeweils einer der Spulenkerne temporär eingesetzt ist,
- wobei der erste Spulenkern so ausgeformt und in den ersten Sinterverschluß so eingesetzt ist, daß nach dem Sintern der erste Spulenkern in den ersten Spulenkern-Sitz paßt und dieser den ersten Spulenkern-Abschnitt formschlüssig wenigstens teilweise umgreift und
- wobei der zweite Spulenkern so ausgeformt und in den zweiten Sinterverschluß so eingesetzt ist, daß nach dem Sintern der zweite Spulenkern in den zweiten Spulenkern-Sitz paßt und dieser den zweiten Spulenkern-Abschnitt formschlüssig wenigstens teilweise umgreift.

Nach einer achten Ausgestaltung des Verfahrens der Erfindung werden Spulenkerne mit wenigstens abschnittsweise gewölbten Stirnflächen verwendet.

Nach einer neunten Ausgestaltung des Verfahrens der Erfindung werden Spulenkerne mit endseitigen Spulenkern-Abschnitten verwendet, die als ein erster bzw. als ein zweiter Polschuh ausgebildet sind.

Nach einer zehnten Ausgestaltung des Verfahrens der Erfindung werden Spulenkerne mit gesinterten endseitigen Spulenkern-Abschnitten verwendet.

Nach einer elften Ausgestaltung des Verfahrens der Erfindung werden vor dem Einfüllen des verflüssigten Isoliermaterials in den Gießraum die erste die Mantel-Öffnung temporär mittels eines ersten Gießverschlusses und die zweite die Mantel-Öffnung temporär mittels eines zweiten Gießverschlusses jeweils gießdicht so verschlossen, daß das Isoliermaterial beide Mantel-Öffnungen wenigstens teilweise ausfüllt.

Nach einer zwölften Ausgestaltung des Verfahrens der Erfindung werden zum gießdichten Verschließen der ersten und der zweiten Mantel-Öffnung Gießverschlüsse verwendet, die jeweils so geformt sind, daß nach dem Erstarrenlassen des Isoliermaterials der erste und der zweite Spulenkern-Sitz für das Einsetzen der Spulenkerne im Liner eingeformt sind.

Nach einer dreizehnten Ausgestaltung des Verfahrens der Erfindung werden zum gießdichten Verschließen der ersten und zweiten Mantel-Öffnung Gießverschlüsse verwendet, in die jeweils einer der Spulenkerne temporär eingesetzt ist,
- wobei der erste Spulenkern so ausgeformt und in den ersten Gießverschluß so eingesetzt ist, daß nach dem Erstarrenlassen der erste Spulenkern in den ersten Spulenkern-Sitz paßt und das Isoliermaterial den ersten Spulenkern-Abschnitt formschlüssig wenigstens teilweise umgreift und
- wobei der zweite Spulenkern so ausgeformt und in den zweiten Gießverschluß so eingesetzt ist, daß nach dem Erstarrenlassen der zweite Spulenkern in den zweiten Spulenkern-Sitz paßt und das Isoliermaterial den zweiten Spulenkern-Abschnitt formschlüssig wenigstens teilweise umgreift.

Nach einer vierzehnten Ausgestaltung des Verfahrens der Erfindung werden
- vor dem Einfüllen des verflüssigten Isoliermaterials eine zylindrische erste Spule auf dem ersten Spulenkern und eine zylindrische zweite Spule auf dem zweiten Spulenkern angeordnet und
- zum gießdichten Verschließen der ersten und der zweiten Mantel-Öffnung Gießverschlüsse verwendet, in die jeweils einer der Spulenkerne mit jeweils einer Spule bzw. temporär eingesetzt ist,
- wobei der erste Spulenkern mit der ersten Spule so geformt und in den ersten Gießverschluß so eingesetzt ist, daß nach dem Erstarrenlassen die erste Spule in das Isoliermaterial eingebettet ist und
- wobei der zweite Spulenkern mit der zweiten Spule so geformt und in den zweiten Gießverschluß so eingesetzt ist, daß nach dem Erstarrenlassen die zweite Spule in das Isoliermaterial eingebettet ist.

Nach einer fünfzehnten Ausgestaltung des Verfahrens der Erfindung
- wird das Trägerrohr vor dem Einsetzen des ersten Sinter-Dorns mit einer dritten Mantel-Öffnung für das Einsetzen einer ersten Elektrode und mit einer vierten Mantel-Öffnung für das Einsetzen einer zweiten Elektrode versehen und
- werden nach dem Einsetzen des ersten Sinter-Dorns die dritte Mantel-Öffnung mittels eines dritten Sinterverschlusses und die vierte Mantel-Öffnung mittels eines vierten Sinterverschlusses jeweils sinterdicht temporär verschlossen.

Nach einer sechzehnten Ausgestaltung des Verfahrens der Erfindung werden zum sinterdichten Verschließen der dritten und vierten Mantel-Öffnung Sinterverschlüsse verwendet, die so geformt und bemessen sind, daß beide Sinterverschlüsse beim Sintern in das Lumen des Trägerrohrs hineinragen.

Nach einer siebzehnten Ausgestaltung des Verfahrens der Erfindung werden zum sinterdichten Verschließen der dritten und vierten Mantel-Öffnungen Sinterverschlüsse verwendet, die so geformt und bemessen sind, daß beide Sinterverschlüsse beim Sintern jeweils bis zum ersten Sinter-Dorn reichen.

Nach einer achtzehnten Ausgestaltung des Verfahrens der Erfindung werden vor dem Einfüllen des verflüssigten Isoliermaterials die dritte Mantel-Öffnung mittels eines dritten Gießverschlusses und die vierte Mantel-Öffnung mittels eines vierten Gießverschlusses jeweils gießdicht so temporär verschlossen, daß das Isoliermaterial die beiden Mantel-Öffnungen nach dem Erstarrenlassen wenigstens teilweise ausfüllt.

Nach einer neunzehnten Ausgestaltung des Verfahrens der Erfindung werden zum gießdichten Verschließen der dritten und vierten Mantel-Öffnung Gießverschlüsse verwendet, in die jeweils eine der Elektroden temporär eingesetzt ist,
- wobei die erste Elektrode so ausgeformt und in den dritten Gießverschluß so eingesetzt ist, daß nach dem Erstarrenlassen die erste Elektrode in den Liner eingepaßt ist und das Isoliermaterial diese abschnittsweise formschlüssig umgreift und
- wobei die zweite Elektrode so ausgeformt und in den vierten Gießverschluß so eingesetzt ist, daß nach dem Erstarrenlassen die zweite Elektrode in den Liner eingepaßt ist und das Isoliermaterial diese abschnittsweise formschlüssig umgreift.

Nach einer zwanzigsten Ausgestaltung des Verfahrens der Erfindung wird ein Trägerrohr aus Edelstahl verwendet.

Nach einer einundzwanzigsten Ausgestaltung des Verfahrens der Erfindung wird als erstes Sinterausgangsmaterial Sinterbronze verwendet.

Nach einer zweiundzwanzigsten Ausgestaltung des Verfahrens der Erfindung wirdals Isoliermaterial Polyfluorcarbon verwendet.

Nach einer dreiundzwanzigsten Ausgestaltung des Verfahrens der Erfindung erfolgt das Einfüllen und Erstarrenlassen des Isoliermaterials durch ein Transfer-Mold-Verfahren, ein Compression-Mold-Verfahren oder ein Injection-Mold-Verfahren.

Ein Grundgedanke der Erfindung besteht darin, Stützkörper und Liner nicht als vorgefertigte Komponenten in das Trägerrohr einzusetzen, sondern direkt im Trägerrohr, also in situ, herzustellen.

Dadurch ist es beispielsweise möglich, einerseits die Stirnflächen der Spulenkerne in weiten Grenzen beliebig, insb. als Polschuhe, auszubilden und somit das Magnetfeld im Fluid zu optimieren sowie andererseits den Stützkörper mit Spulenkernsitzen für das Einsetzen der Spulenkerne zu versehen, deren jeweilige Form mit der Form der Stirnflächen übereinstimmt.

Ein Vorteil des Verfahrens der Erfindung ist es, daß der Stützkörper praktisch in jedes beliebig geformte Lumen des Trägerrohrs auf einfache Weise paßgenau und festsitzend eingebracht werden kann. Durch das zusätzliche Einbringen stirnseitiger Aufweitungen in das Trägerrohr und deren Ausfüllen mit Material für den Stützkörper können der Stützkörper und damit auch der Liner im Trägerrohr auf einfache Art und Weise zentriert und arretiert werden.

Ein weiterer Vorteil des Verfahrens besteht darin, daß der Liner mit eingebettetem Stützkörper bereits in der endgültigen Form und Lage gefertigt wird und beiden somit praktisch jede erforderliche, insb. auch andere Bauteile umschließende, Raumform gegeben werden kann. Daher können bereits beim Sintern des Stützkörpers und beim Einfüllen und Erstarrenlassen des Isoliermaterials des Liners paßgenaue Spulenkernsitze für die Spulenkerne bzw. Durchführungen für die Elektroden in den Liner eingearbeitet werden, wobei die Durchführungen, falls erforderlich, innen vom Isoliermaterial des Liners überdeckt sind. Werden die Spulenkerne bzw. diese mit aufgesetzter Spule bereits vor dem Einfüllen des Isoliermaterials am Trägerrohr angeordnet, so sind diese ebenfalls während der Fertigung des Liners in das Isoliermaterial ganz oder teilweise einbettbar.

Durch ein entsprechendes Einbetten von ferromagnetischen Sintermaterialien in den Stützkörper, und zwar in den Bereichen, in denen im Betrieb des Durchflußaufnehmers die Einkopplung des Magnetfeldes in das Innere des Meßrohrs erfolgen soll, sind die Polschuhe direkt in den Liner integrierbar. Werden mehrere ferromagnetischen Sintermaterialien von unterschiedlicher Permeabilität verwendet, ist das im Betrieb des Durchflußaufnehmer erzeugte Magnetfeld in seiner räumlichen Ausprägung dementsprechend beeinflußbar und somit optimierbar.

Ferner besteht ein Vorteil des Verfahrens der Erfindung darin, daß der Liner mit Stützkörper für beliebige Nennweiten praktisch ohne technischen Mehraufwand in beliebiger Stärke und Länge und damit mit jeder erforderlichen mechanischen Festigkeit und Formstabilität ausführbar ist. Der Stützkörper kann nämlich auch, falls ein einmaliges Sintern für die mechanische Festigkeit nicht ausreicht, mehrfach gesintert werden kann. Er kann aber auch aus mehreren nacheinander in-situ-hergestellten Sinter-Schichten aufgebaut werden.

Die Erfindung wird nun anhand der Figuren der Zeichnung näher erläutert, in der Ausführungsbeispiele dargestellt sind. Gleiche Teile sind mit gleichen Bezugszeichen versehen. Falls es die Übersichtlichkeit jedoch erfordert, sind Bezugszeichen in nachfolgenden Figuren weggelassen.
- Fig. 1: zeigt perspektivisch im Längsschnitt einen magnetisch-induktiven Durchflußaufnehmer,
- Fig. 2: zeigt im Querschnitt einen wesentlichen Teil eines magnetisch-induktiven Durchflußaufnehmers,
- Fig. 3a: zeigt im Längsschnitt ein Trägerrohr mit Mantel-Öffnungen für das Einsetzen von Spulenkernen und Elektroden,
- Fig. 3b: zeigt im Längsschnitt das Einfüllen von Sintermaterial in das Trägerrohr von Fig. 3a,
- Fig. 3c: zeigt im Längsschnitt das Trägerrohr von Fig. 3a mit einem Stützkörper und mit darin eingesinterten Spulenkernen,
- Fig. 3d: zeigt im Längsschnitt das Einfüllen von weiterem Sintermaterial in das Trägerrohr von Fig. 3c,
- Fig. 3e: zeigt im Längsschnitt das Einfüllen von Isoliermaterial in das Trägerrohr Fig. 3c und
- Fig. 3f: zeigt im Längsschnitt einen magnetisch-induktiven Durchflußaufnehmer.

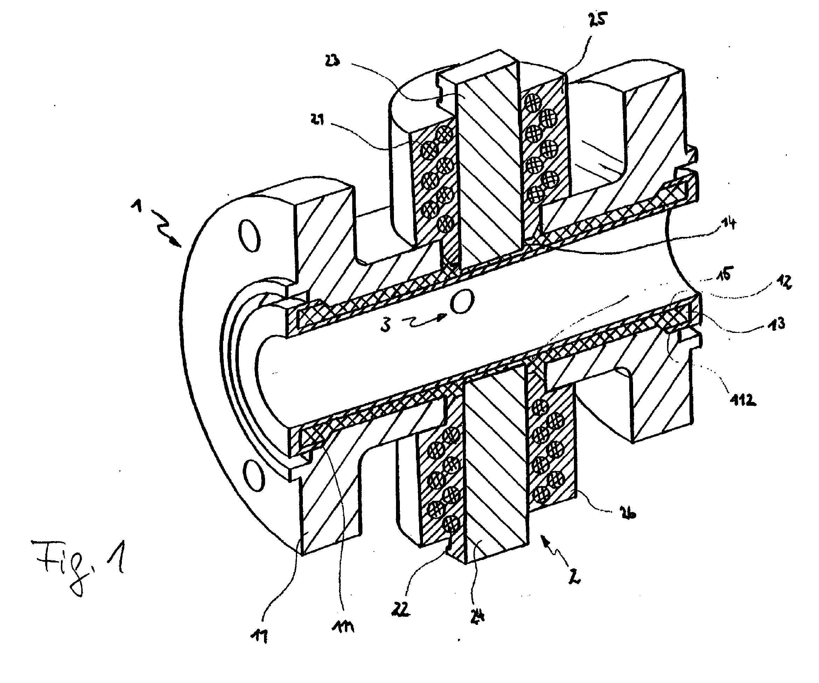

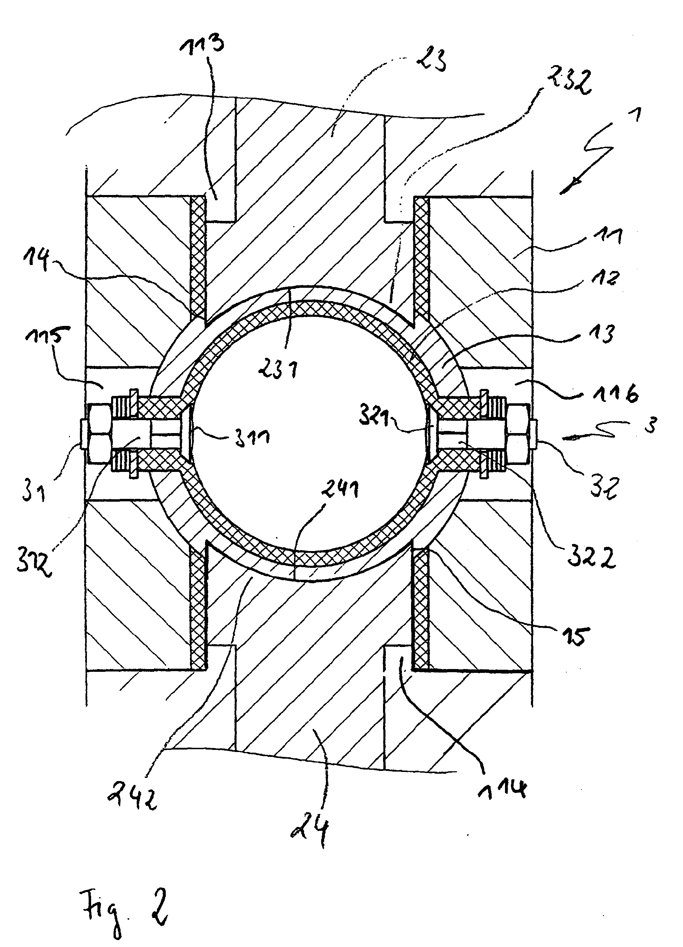

Fig. 1 zeigt perspektivisch im Längsschnitt einen magnetisch-induktiven Durchflußaufnehmer und Fig. 2 zeigt schematisch im Querschnitt einen wesentlichen Teil des Durchflußaufnehmers. Der Durchflußaufnehmer umfaßt ein gerades Meßrohr 1 von vorgebbarer Form und Größe zum Führen eines strömenden Fluids, eine am Meßrohr 1 angeordnete Magnetkreisanordnung 2 zum Führen eines Magnetfeldes durch das Fluid sowie eine ebenfalls am Meßrohr 1 angeordnete Elektrodenanordnung 3 zum Messen einer im Fluid induzierten Spannung.

Zum druckdichten Einfügen in eine von einem Fluid durchströmbare Rohrleitung weist das Meßrohr 1 ein einlaßseitiges erstes Ende und ein auslaßseitiges zweites Ende auf.

Das Meßrohr 1 umfaßt ein Trägerrohr 11 von vorgebbarem Lumen und einen rohrförmigen, aus einem Isoliermaterial bestehenden Liner 12 von vorgebbarer Weite sowie einen in den Liner 12 eingebetteten, offenporiger Stützkörper 13 von vorgebbarer Poren-Größe und Dicke. Der ebenfalls rohrförmig ausgeführte Stützkörper 13 dient der mechanischen Stabilisierung des Liners 12, insb. bei Temperaturen des strömenden Fluids von -40°C bis 200° in einem Druckbereich von 0 bar bis 40 bar.

Das Trägerrohr 11 umschließt den Liner 12 mit eingebettetem Stützkörper 13 koaxial und dient somit als eine äußere formgebende sowie formstabilisierende Umhüllung Meßrohrs 1.

Nach den Fig. 1 und 2 ist das Meßrohr 1 so ausgeführt, daß das Trägerrohr 11 bzw. der Stützkörper 13 innen vollständig vom Liner 12 bedeckt ist und somit allein der Liner 12 vom durch das Meßrohr 1 hindurchströmende Fluid benetzt wird, vgl. hierzu auch die US-A 32 13 685.

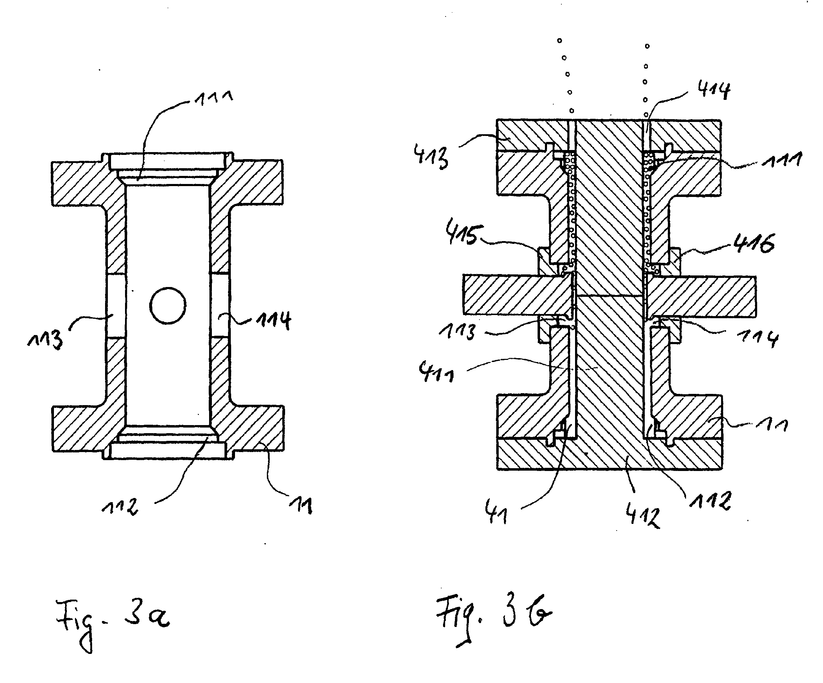

Die Fig. 3a bis 3f zeigen im Längsschnitt einen jeweils momentanen Zustand des Durchflußaufnehmers während verschiedener Verfahrensschritte bei der Herstellung.

In Fig. 3a ist das Trägerrohr 11 zu Beginn des Verfahrens der Erfindung gezeigt. Es wird bevorzugt kostengünstig als Gußteil hergestellt, das nachträglich z.B. durch spanende Verfahren wie Fräsen, Drehen und/oder Bohren fertigbearbeitet wird; es kann selbstverständlich auch, ausschließlich durch spanende Verfahren oder andere dem Fachmann bekannte Herstellverfahren für Rohre gefertigt werden. Als Materialien für das Trägerrohr 11 kommen alle in Durchflußaufnehmern üblicherweise verwendeten Edelstähle, insb. legierte und hochlegierte Edelstähle, zum Einsatz; es können aber auch andere nichtferromagnetische Legierungen, wie z.B. Kupferlegierungen, Titanlegierungen oder Nickellegierungen, aber auch geeignete Kunststoffe, wie z.B. glasfaserverstärkte Kunststoffe, verwendet werden.

Der Stützkörper 13 ist nach Fig. 1 ein rohrförmiger Körper, der durch In-situ-Sintern von körnigem Sinterausgangsmaterial vorgebbarer Partikel-Größe, also durch Sintern in der endgültigen Einbauform und Einbaulage, im Trägerrohr 11 paßförmig und festsitzend gefertigt wird.

Gemäß Fig. 3b wird zum Sintern des Stützkörpers 13 ein erster Sinter-Dorn 411 in das Lumen des Trägerrohr 11 eingebracht und dort temporär so fixiert, daß ein zum Trägerrohr 11 koaxial verlaufender erster Sinterraum 41 von vorgebbarem ersten Sinter-Volumen gebildet wird. Der Sinter-Dorn 411 besteht aus zwei Teildornen, die so ausgeführt sind, daß sie nach dem Einbringen in das Trägerrohr 11 mit ihren jeweiligen Stirnflächen aneinanderstoßen; der Sinter-Dorn 411 kann selbstverständlich auch in geeigneter Weise einteilig ausgeführt sein.

Er ist bevorzugt rotationssymmetrisch bezüglich einer Längsachse und hat einen kleinsten Durchmesser, der größer als die vorgebbare Weite des Liners 12 ist, und einen größten Durchmesser, der kleiner als ein größter InnenDurchmesser des Trägerrohrs 11 ist, ausgebildet; der Sinter-Dorn 411 kann selbstverständlich auch, wenn erforderlich, nicht-rotationssymmetrisch, z.B. elliptisch oder prismatisch, ausgeführt sein.

Falls der Stützkörper 13, wie z.B. bei kleinen Nennweiten von 10 mm bis 20 mm üblich, jeweils vom einlaßseitigen und auslaßseitigen Ende nach innen zum Meßrohr konisch oder trichterförmig verjüngt ausgebildet ist, besteht der Sinter-Dorn 411 aus zwei Teildornen, die in entsprechender Weise konisch oder trichterförmig ausgeführt sind und die nach dem Einbringen in das Trägerrohr 11 jeweils mit ihren kleineren Stirnflächen aneinanderstoßen.

Nach dem Einbringen des Sinter-Dorns 411 wird das Trägerrohr 11 so verschlossen, daß nur Einfüll-Öffnungen für das Sinterausgangsmaterial verbleiben. Diese sind dabei bevorzugt durch ein einziges offengelassenes Ende des Trägerrohrs 11 gebildet. Das Fixieren des Sinter-Dorns 411 und das Verschließen des Sinterraums 41 erfolgt üblicherweise mittels eines endseitigen ersten Flansches 412; wird der Sinter-Dorn 411, wie in Fig. 3b dargestellt, auch am zweiten Ende mittels eines endseitigen zweiten Flansches 413 fixiert, so weist bevorzugt einer der beiden Flansche 412, 413 die entsprechenden Einfüll-Öffnungen 414 auf. Es ist selbstverständlich und klar, daß Partikel-Größe, Sinter-Volumen und Einfüll-Öffnungen so zu bemessen sind, daß das Sinterausgangsmaterial in den Sinterraum 41 einfüllbar ist.

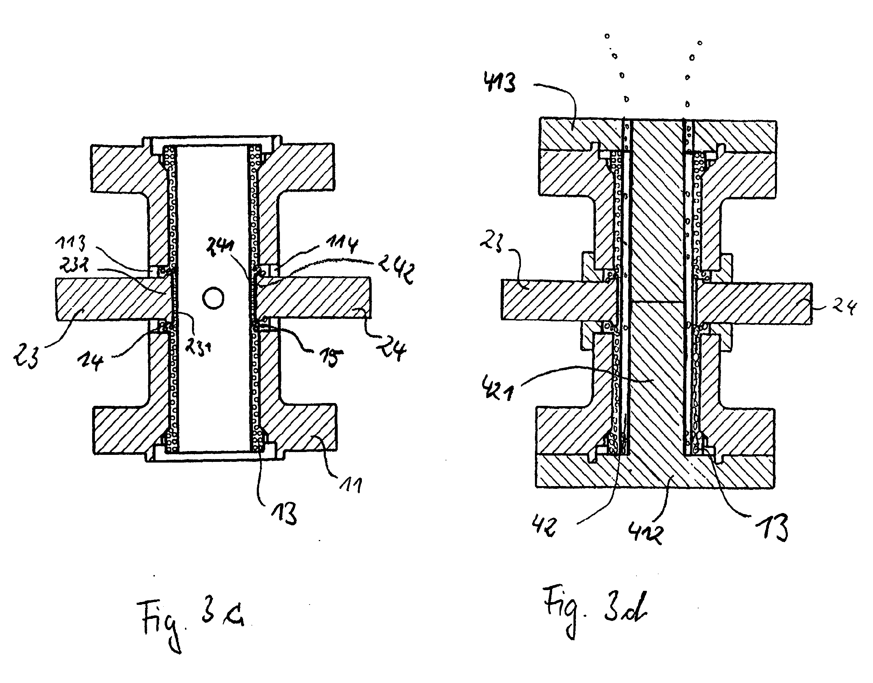

Nach dem Verschließen des Sinterraums 41 wird dieser, wie in Fig. 3b schematisch dargestellt, mit dem Sinterausgangsmaterial gefüllt. Danach wird das Sinterausgangsmaterial im Sinterraum 41 gesintert, wodurch der Stützkörper 13 im Lumen des Trägerrohr 11 paßförmig gebildet wird, vgl. Fig. 3c. Gegebenenfalls wird das Trägerrohr 11 vor dem Sintern vollständig dicht verschlossen.

Als Sinterausgangsmaterial dienen Metallpartikel, insb. aus Sinterbronze; es können aber auch andere Materialien, wie z.B. Sinterglaspartikel, Sinterkeramikpartikel oder sinterfähige, insb. oberflächen-metallisierte, Kunststoffpartikel, verwendet werden.

Für den Fall, daß im Betrieb des Durchflußaufnehmers, z.B. aufgrund unterschiedlicher thermischer Ausdehnung von Stützkörper 13 und Trägerrohr 11, mechanische Spannungen zu erwarten sind, die, insb. innerhalb des Stützkörpers 13, einen maximal zulässigen Betrag überschreiten, sind Maßnahmen zu deren Reduzierung erforderlich.

Nach einer Ausgestaltung der Erfindung besteht der Stützkörper 13 dazu aus wenigstens zwei rohrförmigen Teil-Stützkörpern mit voneinander verschiedenen thermischen Ausdehnungskoeffizienten, die koaxial zueinander angeordnet und kraftschlüssig miteinander verbunden sind.

Zur Fertigung des aus mindestens zwei Teil-Stützkörpern bestehenden Stützkörpers 13 wird nach einer Ausgestaltung des Verfahrens der Erfindung wird gemäß Fig. 3d der für das Sintern eingesetzte erste Sinter-Dorn 411 durch einen zweiten Sinter-Dorn 421 ersetzt, der temporär so im Lumen des Trägerrohrs 11 fixiert wird, daß zwischen dem Sinter-Dorn 421 und dem bereites gesinterten Stützkörper 13 ein mit der Längsachse des Lumens koaxial fluchtender zweiter Sinterraum 42 von vorgebbarem zweiten Sinter-Volumen gebildet wird; der Sinter-Dorn 421 kann dabei, falls erforderlich, wie der Sinter-Dorn 411 zweiteilig ausgeführt sein.

Der Sinter-Dorn 421 hat einen kleinsten Durchmesser, der größer als die kleinste Weite des Liners 12 ist, und einen größten Durchmesser, der kleiner als der größte Durchmesser des Sinter-Dorns 411 ist.

Nach dem Einbringen des Sinter-Dorns 421 wird das Trägerrohr 11, wie beim vorausgegangen Sintern sinterdicht verschlossen, z.B. wiederum mittels der Flansche 412, 413. Danach wird der Sinterraums 42 mit einem zweiten Sinterausgangsmaterial, insb. vollständig, gefüllt und das Trägerrohr 11 daraufhin ggf. vollständig dicht verschlossen. Im Anschluß daran wird das zweite Sinterausgangsmaterial im Sinterraum 42 gesintert, und somit ein verstärkter, praktisch aus zwei koaxialen Teil-Stützkörpern bestehender Stützkörper 13 gefertigt.

Diese Ausführung des Stützkörpers 13 aus zwei oder mehreren Teil-Stützkörpern kann z.B. ebenso zur Optimierung von Temperaturverteilungen im Meßrohr 1 oder zur Optimierung der elektromagnetischen Eigenschaften des Stützkörpers 13 dienen.

Nach den Fig. 1 und 2 ist das Meßrohr 1 innen mit einem Liner 12 ausgekleidet, und zwar so, daß Stützkörper 13 und Trägerrohr 11 im Betrieb des Durchflußaufnehmers vollständig vom hindurchströmenden Fluid isoliert sind.

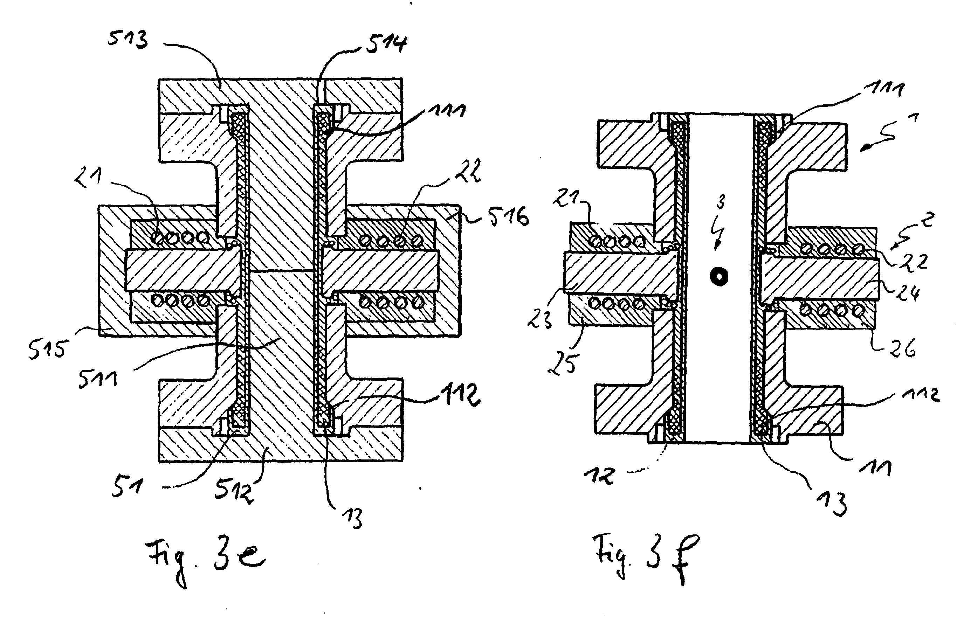

Der Liner 12 wird gemäß Fig. 3e nach der Fertigung des Stützkörpers 13 ebenfalls direkt im Trägerrohr 11 durch Einfüllen und Erstarrenlassen von verflüssigtem Isoliermaterial hergestellt. Dies erfolgt bevorzugt in einem üblichen Transfer-, Kompression- oder Injection-Molding-Verfahren.

Als Isoliermaterial können hierzu alle diejenigen bei magnetisch-induktiven Durchflußaufnehmern üblicherweise für den Liner 12 eingesetzten Kunststoffe dienen, die zum Einbringen in das Trägerrohr 11 mindestens einmal verflüssigt werden können, wie z.B. Thermoplaste, insb. fluorhaltige Thermoplaste oder Polyolefine, oder Duroplaste, insb. Gießharze oder Polyurethane.

Zur Herstellung des Liners 12 wird der beim das Sintern verwendete Sinter-Dorn 411 bzw. 421 durch einen Gieß-Dorn 511 ersetzt, der temporär so im Lumen des Trägerrohr 11 fixiert wird, daß zwischen dem Gieß-Dorn 511 und dem Stützkörper 13 ein mit der Längsachse des Lumens koaxial fluchtender Gießraum 51 von vorgebbarem Gieß-Volumen gebildet wird. Der Gieß-Dorn 511 ist bevorzugt zylindrisch mit einem Durchmesser, der, unter Berücksichtigung eines Gieß-Volumenschwundes nach dem Erstarrenlassen, höchstens gleich der vorgegebenen Weite des Liners 12 ist, ausgebildet.

Nach dem Einbringen des ersten Gieß-Dorns 511 wird das Trägerrohr 11 gießdicht so verschlossen, daß nur Eingieß-Öffnungen für das verflüssigte Isoliermaterial verbleiben. Das Fixieren des Gieß-Dorns 511 und das Verschließen des Trägerrohr 11 erfolgt üblicherweise mittels eines dritten und vierten endseitigen Flansches 512 bzw. 513, von denen z.B. einer eine entsprechende Eingieß-Öffnung 514 aufweist.

Nach dem Verschließen des Trägerrohr 11 wird in den Gießraum 51 verflüssigtes Isoliermaterial eingefüllt. Dieses dringt in die Poren des Stützkörpers 13 ein und füllt diesen aus.

Das Einfüllen erfolgt bevorzugt solange bis der Gießraum 51 und der Stützkörper 13 vollständig mit dem Isoliermaterial ausgefüllt sind, mindestens aber solange, bis der Gießraum 51 vollständig und der Stützkörper 13 wenigstens teilweise mit dem Isoliermaterial ausgefüllt sind. Dadurch bedeckt das Isoliermaterial nach dem Erstarren den Stützkörper 13 mindestens an der beim Betrieb des Durchflußaufnehmers dem Fluid zugewandten, inneren Seite vollständig.

Nach dem Einfüllen wird das Isoliermaterial erstarrengelassen und somit der Liner 12 mit eingebettetem Stützkörper 13 im Lumen des Trägerrohrs 11 paßförmig derart gebildet, daß dieser den Stützkörper 13 und das Trägerrohr 11 vom Fluid isoliert.

Das Trägerrohr 11 weist bevorzugt eine in das einlaßseitige erste Ende eingebrachte stirnseitig erste Aufweitung 111 und eine in das auslaßseitige zweite Ende eingebrachte zweite Aufweitung 112 auf. Die beiden Aufweitungen 111, 112 sind nach Fig. 1 bzw. 3a abschnittsweise einwärts sich konisch verjüngend ausgebildet; sie können aber auch von gerader zylindrischer Form sein.

Beide Aufweitungen 111, 112 sind beim Sintern vom Sinterausgangsmaterial wenigstens teilweise ausgefüllt, und zwar so, daß der gesinterte Stützkörper 13 mit dem Trägerrohr 11 verspannt und somit zusätzlich fixiert ist, vgl. Fig. 3c.

Bevorzugt sind die Aufweitungen 111, 112 vom Stützkörper 13 so ausgefüllt, daß der Liner 12 den Stützkörper 13 im Bereich der Aufweitungen 111, 112 teilweise umgreift und damit endseitig praktisch vollständig überdeckt, vgl. hierzu die Fig. 3e und 3f.

Zur optimalen Anpassung der Poren-Größe an das Isoliermaterial des Liners 12 sowie zur Reduzierung von Volumenschwund des gesinterten Stützkörpers 13 gegenüber dem ersten bzw. zweiten Sinter-Volumen sind nach einer weiteren Ausgestaltung des Verfahrens der Erfindung auch entsprechende sinterfähigen Gemische von verschiedenen Sinterausgangsmaterialien und/oder von unterschiedlichen Partikel-Größen einsetzbar.

Zum Erzeugen und zum Führen eines das Fluid abschnittsweise durchsetzenden Magnetfelds weist der Durchflußaufnehmer nach den Fig. 1 und 2 eine Magnetkreisanordnung 2 auf. Diese umfaßt eine erste und eine zweite zylindrische Spule 21, 22, von denen jede einen ersten bzw. einen zweiten ferromagnetischen Spulenkern 23, 24 mit jeweils einer freien endseitigen ersten bzw. zweiten Stirnfläche 232, 242 von vorgebbarer Form umgibt.

Zur Unterdrückung von Wirbelströmen sind die Spulenkerne bevorzugt als ein einziges Blechformteil oder als Paket von mehreren, elektrisch voneinander isoliert geschichteten Blechformteilen ausgeführt, vgl. die JP-Y 2 - 28 406 oder die US-A 46 41 537.

Außerhalb des Meßrohrs 1 sind die Spulenkerne 23, 24 an deren der jeweiligen Stirnfläche 232 bzw. 242 gegenüberliegenden Enden mit einem nicht dargestellten, ebenfalls ferromagnetischen, Rückschluß von vorgebbarer Länge und Form verbunden. Üblicherweise ist der Rückschluß beiderseits von außen um das Meßrohr 1 gelegt, vgl. hierzu die US-A 46 41 537.

Nach einer anderen Ausgestaltung der Erfindung bestehen die Spulenkerne 23, 24 anstelle der Blechformteile wenigstens endseitig aus gesintertem ferromagnetischem Material, insb. aus oberflächen-metallisierten Kunststoffpartikeln.

Die Spulen 21, 22 sind bevorzugt jeweils auf einen rohrförmigen, den jeweiligen Spulenkern 23, 24 koaxial umschließenden ersten bzw. zweiten Spulenkörper 25, 26 gewickelt; die Spulen 21, 22 können aber auch selbsttragend oder in den Spulenkörper 25, 26 wenigstens teilweise eingebettet sein. Neben Magnetkreisanordnungen mit zwei Spulen sind auch solche mit drei oder mehr Spulen üblich, vgl. hierzu die JP-A 3 - 218 414.

Im Meßbetrieb sind die Spulen 21, 22 mit einer Erreger-Elektronik zum Erzeugen elektrischer Ströme vorgebbarer Stromstärke verbunden und von letzteren durchflossen. Dadurch entstehen zwei Teilmagnetfelder, die die jeweiligen Stirnflächen 232, 242 der zugehörigen Spulenkerne 23, 24 im wesentlichen flächennormal schneiden und sich dabei zu einem resultierenden Magnetfeld gerichtet überlagern. Dieses durchsetzt das innerhalb eines Meßvolumen strömende Fluid abschnittsweise senkrecht zu dessen Strömungsrichtung. Als Erreger-Elektronik können die im Stand der Technik beschriebenen Schaltungsanordnungen verwendet werden.

Zur Aufnahme der Spulenkerne 23, 24 umfaßt das Meßrohr 1 bevorzugt einen ersten Spulenkernsitz 14 für das stirnseitige Einsetzen des Spulenkerns 23 und einen zweiten Spulenkernsitz 15 für das stirnseitige Einsetzen des Spulenkerns 24, vgl. die Fig. 1 und 2.

Die Spulenkernsitz 14, 15 weisen bevorzugt eine die jeweilige Stirnflächen 231 bzw. 241 der Spulenkerne 23, 24 formschlüssig berührende erste bzw. zweite Fläche auf, an der der jeweils zugehörige Spulenkern 23, 24 flächig anliegt.

Für das Einsetzen der Spulenkerne 23, 24 in die Spulenkernsitze 14, 15 ist das Trägerrohr 11 mit einer seitlichen ersten Mantel-Öffnung 113 und mit einer seitlichen zweiten Mantel-Öffnung 114 versehen. Beide Mantel-Öffnungen 113, 114 haben bevorzugt die gleiche Form und sind entlang eines Umfangkreises des Trägerrohrs 11 voneinander beabstandet angeordnet, insb. so, daß sie sich diametral gegenüberliegen.

Die Spulenkerne 23, 24 sind so durch die jeweilige Mantelöffnung 113 bzw. 114 hindurch in das Meßrohr 1 eingesetzt und so zueinander ausgerichtet, daß sich ihre beiden Stirnflächen 231, 241 entlang des Umfangkreises voneinander beabstandet, insb. diametral beabstandet und spiegelbildlich, gegenüberliegen. Die Mantel-Öffnungen 113, 114 bzw. die Stirnflächen 231, 241 können aber auch entlang einer Sehne des Umfangkreises des Meßrohrs 1 voneinander beabstandet und/oder nicht-spiegelbildlich am Meßrohr 1 angeordnet sein, vgl. JP-A 3 - 218 414.

Für das Einsetzen der Spulenkerne 23, 24 sind die Mantel-öffnungen 113, 114 selbstverständlich so zu dimensionieren, daß die Spulenkerne 23, 24 ohne weiteres hindurchpassen.

Die Mantel-Öffnungen 113, 114 werden vor dem Einsetzen des ersten Sinter-Dorns 411 in das Trägerrohr 11 eingebracht und beim Einfüllen und Sintern des Sinterausgangsmaterials für den Stützkörper 13 mittels eines ersten bzw. mittels eines zweiten Sinterverschlusses 415, 416 sinterdicht verschlossen, vgl. Fig. 3b.

Die beiden Sinterverschlüsse 415, 416 sind bevorzugt so ausgeführt, daß der Stützkörper 13 gemäß Fig. 3c die beiden Mantel-Öffnungen 113, 114 wenigstens teilweise ausfüllt. Das Ausfüllen der Mantel-Öffnungen 113, 114 erfolgt z.B. so, daß der Stützkörper 13 seitlich an den Mantel-Öffnungen 113, 114 anliegt und so zusätzlich arretiert ist.

Falls erforderlich sind die beiden Mantel-Öffnungen 113, 114 beim Einfüllen und Erstarrenlassen des verflüssigten Isoliermaterials für den Liner 12, wie in Fig. 3e dargestellt, mittels eines ersten bzw. mittels eines zweiten Gießverschlusses 515, 516 gießdicht zu verschließen.

Die räumliche Ausbildung des Magnetfeldes im Meßvolumen und damit auch die Genauigkeit des Durchflußaufnehmers werden durch den gegenseitigen Abstand der Stirnflächen der Spulenkerne mitbestimmt. Je näher die Stirnflächen zueinander angeordnet sind, desto kleiner ist das Meßvolumen und desto stärker ist das elektrische Feld bei gleicher Erregung, insb. im Bereich des Fluids mit hoher Strömungsgeschwindigkeit, ausgebildet. In entsprechender Weise verringert sich der Einfluß von Störungen im Fluid, die z.B. auf Änderungen im Strömungsverhalten oder auf Temperaturschwankungen beruhen, auf ein mit dem Durchflußaufnehmer gewonnenes Meßsignal. Gleichzeitig wird die Empfindlichkeit des Durchflußaufnehmers gegenüber Änderungen des zu messenden Volumendurchflusses größer. Sie ist optimal, wenn die beiden Stirnflächen so nah wie mölich einander gegenüberliegen.

Zur Steigerung der Empfindlichkeit des Durchflußaufnehmers sind gemäß den Fig. 1 und 2 der erste und der zweite Spulenkernsitz 14, 15 in den Stützkörper 13 mit einer vorgebaren Tiefe so eingeformt, daß sich deren Flächen mit einem vorgebbarem Abstand gegenüberliegen. Dadurch sind die Spulenkerne 23, 24 mit einem endseitigen, an deren Stirnflächen 231, 241 angrenzenden ersten bzw. zweiten Spulenkern-Abschnitt 232 bzw. 242 in den Spulenkernsitz 14 bzw. 15 einsetzbar und somit deren Stirnflächen 231, 241 mit einem vorgebbaren, von der gewählten Dicke des Stützkörpers 13 praktisch unabhängigen, gegenseitigen Abstand am Meßrohr 1 positionierbar.

Die räumliche Ausbildung des Magnetfeldes im Fluid und damit die Empfindlichkeit des Durchflußaufnehmers ist außerdem durch eine geeignete, insb. durch ein gekrümmte oder gewölbte, Formung der Stirnflächen optimierbar. Für den Fall, daß zum Messen ein möglichst kompaktes Meßvolumen bevorzugt wird, können die Stirnflächen 231, 241 zum Lumen des Meßrohrs 1 hin jeweils konvex gekrümmt oder gewölbt sein, und zwar mit einem Krümmungsradius, der kleiner als eine halbe Weite des Liners 12 ist. Anderenfalls der Krümmungsradius entsprechend größer auszulegen.

Zur weiteren Steigerung der Empfindlcihkeit des Durchflußaufnehmers sind daher die beiden Stirnflächen 231, 241 und der jeweils daran angrenzende endseitige Spulenkern-Abschnitt 232, 242 gemäß Fig. 2 polschuhartig mit vorgebbarer Form und Flächeninhalt ausgebildet. Die Stirnflächen 231, 241 sind dann bevorzugt von gewölbter oder gekrümmter Form und weisen eine gleichmäßige und zum Lumen des Meßrohrs 1 hin konvex verlaufende Krümmung auf.

Falls formschlüssige Spulenkernsitze 14, 15 in den Stützkörper 13 eingelassen sind, weisen die beiden die Sinterverschlüsse 415, 416 Flächen auf, die das Sinterausgangsmaterial berühren und die entsprechend der Form der einzusetzenden Spulenkerne 232, 242 ausgebildet sind. Dies gilt dann in analoger Weise auch für die Gießverschlüsse 515, 516 und deren das verflüssigte Isoliermaterial berührenden Flächen.

Durch das Ausformen der beiden Sinterverschlüsse 415, 416 und/oder der beiden Gießverschlüsse 515, 516 entsprechend der Form der einzusetzenden Spulenkerne 232, 242 ist in einfacher Weise ein paßförmiger Spulenkernsitz 14 bzw. 15 in den Stützkörper 13 einformbar.

Dieses Ausformen der Sinterverschlüsse 415, 416 und der Gießverschlüsse 515, 516 ist besonders vorteilhaft dadurch realisierbar, daß der Spulenkern 23 bzw. 24, wie in Fig. 3b dargestellt, vor dem Sintern in den Sinterverschluß 415 bzw. 416 sowie vor dem Einfüllen des verflüssigten Isoliermaterials in den Gießverschluß 515 bzw. 516 temporär eingesetzt wird, vgl Fig. 3e. Dadurch sind die Spulenkerne 23, 24 nach der Fertigstellung des Meßrohrs 1 in den Stützkörper 13 und den Liner 12 endseits, insb. form- und kraftschlüssig, eingelassen.

Somit sind beliebig geformte Spulenkerne, insb. auch mit gewölbten freien endseitigen Stirnflächen, ohne weiteres und praktisch beliebig tief in den Stützkörper 13 einsetzbar. Da die Spulenkerne 23, 24 bereits zum Sintern im Trägerrohr 11 positioniert werden, können diese auch vom Lumen des Trägerrohrs 11 aus in letzteres eingesetzt werden.

Falls der Spulenkern 23 bzw. 24 in den entsprechenden Gießverschluß 515 bzw. 516 temporär eingesetzt wird, werden die Spule 21 bzw. 22 bevorzugt vor dem Einfüllen des Isoliermaterials auf dem Spulenkern 23 bzw. 24 angeordnet. Die Gießverschlüsse 515, 516 sind dabei nach Fig. 3e topfartig so ausgeformt, daß das Isoliermaterial durch den Stützkörper 13 und die Mantel-Öffnungen 113, 114 hindurch aus dem Trägerrohr 11 austritt und daß nach dem Erstarrenlassen des Isoliermaterials die Spule 21 bzw. 22 wenigstens teilweise darin eingebettet und somit praktisch die Spulenkörper 25 bzw. 26 gebildet sind, vgl. 3f. Falls die Poren des Stützkörpers 13 ein hinreichend schnelles Befüllen der Mantel-Öffnungen 113, 114 nicht ermöglichen, sind, bevorzugt beim Sintern, entsprechende Durchlaßkanäle im Stützkörper 13 vorzusehen.

Für den Fall eines nachträglichen Einsetzens der Spulenkerne 23, 24 sind die Spulenkernsitze 14, 15 in ihrer Form und Größe so auszubilden, daß der zugehörige Spulenkern 23 bzw. 24 ohne weiteres eingepaßt werden kann.

Zur weiteren Stabilisierung des Liners 12 können in die Mantel-Öffnungen 113, 114 bei deren Fertigung zusätzliche Stege und Absätze eingeformt, an denen sich der Stützkörper 13 bzw. der Liner 12 abstützt.

Zum Abgreifen einer im Fluid induzierten Spannung weist der Durchflußaufnehmer nach den Fig. 1 und 2 eine am Meßrohr 1 angebrachte Sensoranordnung 3 auf, die eine erste und eine zweite Elektrode 31, 32 umfaßt. Die Elektroden sind bevorzugt stabförmig mit einem ersten bzw. einem zweiten Elektroden-Kopf 311, 321 für das Abgreifen der eingangs erwähnten induzierte Spannung und mit einem ersten bzw. einem zweiten Elektroden-Schaft 312, 322, der dem Anschließen der Sensoranordnung an eine Auswerte-Elektronik dient, ausgebildet.

Die Elektroden 31, 32 können, wie in Fig. 2 dargestellt, galvanische oder aber auch kapazitive Elektroden sein.

Das Trägerrohr 11 ist daher ferner mit einer seitlichen dritten bzw. vierten Mantel-Öffnung 115, 116 für das Einsetzen der Elektrode 31 bzw. 32 versehen.

Die Mantel-Öffnungen 115, 116 haben eine Weite, die größer als ein größter Durchmesser des jeweiligen Elektroden-Schaftes 312 bzw. 322 ist. Sie haben bevorzugt die gleiche Form und liegen bevorzugt einander diametral gegenüber, wobei ein die Mantel-Öffnungen 115, 116 verbindender Durchmesser des Trägerrohrs 11 zu einem die Mantel-öffnungen 113, 114 verbindenden Durchmesser des des Trägerrohrs 11 senkrecht verläuft.

Selbstverständlich können die Elektroden 31, 32, falls erforderlich, insb. bei mehr als zwei Elektroden, am Meßrohr 1 so voneinander beabstandet angeordnet werden, daß sie sich nicht diametral gegenüberliegen. Dies ist z.B. dann der Fall, wenn zusätzliche Elektroden für Referenzpotentiale oder bei waagerechter Einbaulage des Meßrohrs 1 Elektroden zur Überwachung eines Mindestfüllstandes des Fluids im Meßrohr 1 vorgesehen sind.

Für das spätere Einsetzen der stabförmigen Elektroden 31, 32 in das Meßrohr 1 werden die Mantel-Öffnungen 115, 116 mittels eines nicht dargestellten dritten bzw. mittels eines ebenfalls nicht dargestellten vierten Sinter-Dorns nach dem Einsetzen des ersten Sinter-Dorns 411 sinterdicht verschlossen. Das Verschließen Mantel-Öffnungen 115, 116 erfolgt bevorzugt so, daß der dritte und der vierte Dorn bis zum Sinter-Dorn 411 reichen, wodurch sich nach dem Sintern des Stützkörpers 13 die beiden Mantel-Öffnungen 115, 116 in diesem durchgängig fortsetzen, vgl. Fig. 2. Dabei weisen der dritte und vierte Dorn jeweils einen kleinsten Durchmesser auf, der mindestens etwas größer als ein größter Durchmesser des ersten bzw. zweiten Elektroden-Schaftes ist.

Bei der Verwendung von galvanischen Elektroden gemäß Fig. 2 werden die Mantel-Öffnungen 115, 116 und deren Fortsatz im Stützkörper für das Einfüllen des Isoliermaterials mit einem dritten bzw. einem vierten Gießverschluß gießdicht bevorzugt so verschlossen, daß nach dem Erstarren des Isoliermaterials das Meßrohr 1, ausgehend von der jeweiligen Mantel-Öffnung 115 bzw. 116, eine erste bzw. eine zweite Elektroden-Durchführung aufweist.

Das gießdichte Verschließen der Mantel-Öffnungen 115, 116 erfolgt bevorzugt so, daß die Elektroden-Durchführungen an deren Innenseite vollständig und mit einer vorgebbaren Mindestdicke vom Isoliermaterial bedeckt sind und somit bereits während der Fertigung des Liners 12 elektrisch isolierte Elektroden-Durchführungen für die nachträglich einzusetzenden Elektroden geschaffen werden. Der dritte bzw. des vierte Gießverschlußes ist dabei, unter Berücksichtigung des Gieß-Volumenschwundes, in geeigneter Weise so auszubilden, daß nach dem Erstarrenlassen des Isoliermaterials bereits paßförmige, den Elektroden-Schäften 312, 322 entsprechende Elektroden-Durchführungen in das Meßrohr 1 eingeformt sind.

Bei der Verwendung von kapazitiven Elektroden sind die Gießverschlüsse in besonders vorteilhafter Weise dadurch ausführbar, daß in diese die Elektroden 31, 32 so eingesetzt werden, das sie nach dem Einfüllen und Erstarrenlassen des Isoliermaterials bereits in ihrer entgültigen Einbaulage im Meßrohr 1 angeordnet und dabei vom Isoliermaterial des Liners 12 gegen über dem Stützkörper 13 und dem Trägerrohr 11 sowie im Betrieb gegenüber dem Fluid vollständig elektrisch isoliert sind.

Die Elektroden-Schäfte 312, 322 sind innerhalb der Elektroden-Durchführung bevorzugt wenigstens abschnittsweise prismatisch, insb. quaderförmig, ausgeführt, wodurch die Elektroden 31, 32 ohne ein Gegenwerkzeug im Lumen des Meßrohrs 1 leicht montierbar sind.

Bei mehr als zwei Elektroden erfolgt das sinterdichte bzw. gießdichte Verschließen der entsprechenden Elektroden-Öffnungen vor dem Sintern des Stützkörpers bzw. vor dem Einfüllen des Isoliermaterials in analoger Weise mit entsprechenden Gieß- bzw. Sinterverschlüssen.

Da es sich sowohl beim In-situ-Sintern als auch beim Einbringen des Isoliermaterials in das Trägerrohr 11 bzw. den Liner 12 um thermische Verfahren zur Erzielung von Rekristallisationsprozessen im Gefüge immer nur genau einer der genannten Komponenten des Meßrohrs 1, nämlich Trägerrohr 11, Stützkörper 13 oder Liner 12, handelt, muß aufgrund der Bearbeitungsreihenfolge die Entfestigungstemperatur des Trägerrohrs 11 größer als die des Stützkörpers 13 und muß letztere wiederum größer als die Schmelztemperatur des Liners 12 sein.

## Patentansprüche

1. Verfahren zum Herstellen eines ein einlaßseitiges erstes offenes Ende und ein auslaßseitiges zweites offenes Ende aufweisenden Meßrohrs (1) für einen magnetisch-induktiven Durchflußaufnehmer, welches Meßrohr (1) umfaßt:
- ein nicht-ferromagnetisches Trägerrohr (11),
- einen in einem Lumen des Trägerrohrs (11) untergebrachten, aus einem Isoliermaterial bestehenden rohrförmigen Liner (12) und
- einen in den Liner (12) eingebetteten offenporigen Stützkörper (13),
welches Verfahren folgende Schritte umfaßt:
- das Trägerrohr (11) wird vorgefertigt,
- ein erster Sinterraum (41) wird im Lumen des Trägerrohrs (11) dadurch gebildet, daß
-- ein erster Sinter-Dorn (411) mit einem kleinsten Durchmesser, der größer als eine kleinste Weite des Liners (12) ist, in das Lumen des Trägerrohrs (11) eingesetzt und dort temporär fixiert und
-- das Trägerrohr (11) sinterdicht bis auf mindestens eine erste Einfüll-Öffnung (414) für ein körniges erstes Sinterausgangsmaterial verschlossen wird,
- der Stützkörper (13) wird direkt im Lumen des Trägerrohrs (11) paßförmig dadurch gebildet, daß
-- das erste Sinterausgangsmaterial in den ersten Sinterraum (41) eingefüllt,
-- das erste Sinterausgangsmaterial im Sinterraum (41) gesintert und
-- der erste Sinter-Dorn (411) entfernt wird,
- ein Gießraum (51) wird im Lumen des Trägerrohrs (11) dadurch gebildet, daß
-- ein Gieß-Dorn (511) mit einem kleinsten Durchmesser, der höchstens gleich dem kleinsten Durchmesser des Liners (12) ist, im Lumen des Trägerrohrs (11) temporär fixiert und
-- das Trägerrohr (11) gießdicht bis auf mindestens eine Eingieß-Öffnung (514) für ein verflüssigtes Isoliermaterial verschlossen wird, und
- der Liner (12) wird direkt im Lumen des Trägerrohrs (11) dadurch gebildet, daß das verflüssigte Isoliermaterial
-- in den Gießraum (51) eingefüllt,
-- in den Stützkörper (13) eindringen gelassen und
-- im Lumen des Trägerrohrs (11) erstarren gelassen wird.

2. Verfahren nach Anspruch 1,
- bei dem nach dem Sintern des Stützkörpers (13) und vor dem Einsetzen des ersten Gieß-Dorns (511) ein zweiter Sinter-Dorn (421) mit einem kleinsten Durchmesser, der größer als die kleinste Weite des Liners (12) ist, in das Lumen des Trägerrohrs (11) eingesetzt und dort so temporär fixiert wird, daß ein zweiter Sinterraum (42) gebildet wird,
- das Trägerrohr (11) sinterdicht bis auf mindestens eine Einfüll-Öffnung für ein körniges zweites Sinterausgangsmaterial verschlossen wird,
- in den zweiten Sinterraum (42) das zweite Sinterausgangsmaterial eingefüllt wird,
- das zweite Sinterausgangsmaterial gesintert und somit der Stützkörper (13) im Lumen des Trägerrohrs (11) wenigstens abschnittsweise vergrößert wird, und
- der zweite Sinter-Dorn (421) durch den Gieß-Dorn (511) ersetzt wird.

3. Verfahren nach Anspruch 1 oder 2,
- bei dem vor dem Einsetzen des ersten Sinter-Dorns (411)
-- eine erste Aufweitung (111) stirnseitig in das einlaßseitige erste Ende des Trägerrohrs (11) und
-- eine zweite Aufweitung (112) stirnseitig in das auslaßseitige zweite Ende des Trägerrohrs (11) eingebracht werden und
- bei dem das Trägerrohr (11) vor dem Einfüllen des ersten Sinterausgangsmaterials so verschlossen wird, daß nach dem Sintern der Stützkörper (13) die erste und die zweite Aufweitung (111, 112) wenigstens teilweise ausfüllt.

4. Verfahren nach Anspruch 3, bei dem die erste und die zweite Aufweitung (111, 112) nach innen sich trichterförmig verjüngend ausgebildet werden.

5. Verfahren nach einem der Ansprüche 1 bis 3,
- bei dem vor dem Einsetzen des ersten Sinter-Dorns (411) das Trägerrohr (11)
-- mit einer ersten Mantel-Öffnung (113) für das Einsetzen eines eine endseitige erste Stirnfläche (231) aufweisenden ferromagnetischen ersten Spulenkerns (23) und
-- mit einer zweiten Mantel-Öffnung (114) für das Einsetzen eines eine endseitige zweite Stirnfläche (241) aufweisenden ferromagnetischen zweiten Spulenkerns (24) versehen wird und
- bei dem vor dem Einfüllen des ersten Sinterausgangsmaterials in den ersten Sinterraum (41) die erste Mantel-Öffnung (113) temporär mittels eines ersten Sinterverschlusses (415) und die zweite Mantel-Öffnung (114) temporär mittels eines zweiten Sinterverschlusses (416) jeweils sinterdicht verschlossen werden.

6. Verfahren nach Anspruch 5, bei dem zum sinterdichten Verschließen der ersten und zweiten Mantel-Öffnung (113, 114) Sinterverschlüsse (415, 416) verwendet werden, die so geformt sind, daß der Stützkörper (13) nach dem Sintern beide Mantel-Öffnungen (113, 114) wenigstens teilweise ausfüllt.

7. Verfahren nach Anspruch 5 oder 6, bei dem zum sinterdichten Verschließen der ersten und zweiten Mantel-Öffnung (113, 114) Sinterverschlüsse (415, 416) verwendet werden, die jeweils so geformt sind, daß nach dem Sintern
- ein von der ersten Mantel-Öffnung (113) ausgehender erster Spulenkern-Sitz (14) für das Einsetzen eines von der ersten Stirnfläche (231) des ersten Spulenkerns (23) ausgehenden, endseitigen ersten Spulenkern-Abschnittes (232) und
- ein von der zweiten Mantel-Öffnung (114) ausgehender zweiter Spulenkern-Sitz (15) für das Einsetzen eines von der zweiten Stirnfläche (241) des zweiten Spulenkerns (24) ausgehenden, endseitigen zweiten Spulenkern-Abschnittes (242) im Stützkörper (13) eingeformt sind.

8. Verfahren nach Anspruch 7, bei dem zum sinterdichten Verschließen der ersten und zweiten Mantel-Öffnung (113, 114) Sinterverschlüsse (415, 416) verwendet werden, in die jeweils einer der Spulenkerne (23, 24) temporär eingesetzt ist,
- wobei der erste Spulenkern (23) so ausgeformt und in den ersten Sinterverschluß (415) so eingesetzt ist, daß nach dem Sintern der erste Spulenkern (23) in den ersten Spulenkern-Sitz (14) paßt und dieser den ersten Spulenkern-Abschnitt (232) formschlüssig wenigstens teilweise umgreift und
- wobei der zweite Spulenkern (24) so ausgeformt und in den zweiten Sinterverschluß (416) so eingesetzt ist, daß nach dem Sintern der zweite Spulenkern (24) in den zweiten Spulenkern-Sitz (15) paßt und dieser den zweiten Spulenkern-Abschnitt (242) formschlüssig wenigstens teilweise umgreift.

9. Verfahren nach Anspruch 7 oder 8, bei dem Spulenkerne (23, 24) mit wenigstens abschnittsweise gewölbten Stirnflächen (231, 241) verwendet werden.

10. Verfahren nach einem der Ansprüche 7 bis 9, bei dem Spulenkerne (23, 24) mit endseitigen Spulenkern-Abschnitten (232, 242) verwendet werden, die als ein erster bzw. als ein zweiter Polschuh ausgebildet sind.

11. verfahren nach einem der Ansprüche 7 bis 10, bei dem Spulenkerne (23, 24) mit gesinterten endseitigen Spulenkern-Abschnitten (232, 242) verwendet werden.

12. Verfahren nach einem der Ansprüche 5 bis 11, bei dem vor dem Einfüllen des verflüssigten Isoliermaterials in den Gießraum (51) die erste die Mantel-Öffnung (113) temporär mittels eines ersten Gießverschlusses (515) und die zweite die Mantel-Öffnung (114) temporär mittels eines zweiten Gießverschlusses (516) jeweils gießdicht so verschlossen werden, daß das Isoliermaterial beide Mantel-Öffnungen (113, 114) wenigstens teilweise ausfüllt.

13. Verfahren nach Anspruch 12, bei dem zum gießdichten Verschließen der ersten und der zweiten Mantel-Öffnung (113, 114) Gießverschlüsse (515, 516) verwendet werden, die jeweils so geformt sind, daß nach dem Erstarrenlassen des Isoliermaterials der erste und der zweite Spulenkern-Sitz (14, 15) für das Einsetzen der Spulenkerne (23, 24) im Liner (12) eingeformt sind.

14. Verfahren nach Anspruch 12 oder 13 bei dem zum gießdichten Verschließen der ersten und zweiten Mantel-Öffnung (113, 114) Gießverschlüsse (515, 516) verwendet werden, in die jeweils einer der Spulenkerne (23, 24) temporär eingesetzt ist,
- wobei der erste Spulenkern (23) so ausgeformt und in den ersten Gießverschluß (515) so eingesetzt ist, daß nach dem Erstarrenlassen der erste Spulenkern (23) in den ersten Spulenkern-Sitz (14) paßt und das Isoliermaterial den ersten Spulenkern-Abschnitt (232) formschlüssig wenigstens teilweise umgreift und
- wobei der zweite Spulenkern (24) so ausgeformt und in den zweiten Gießverschluß (516) so eingesetzt ist, daß nach dem Erstarrenlassen der zweite Spulenkern (24) in den zweiten Spulenkern-Sitz (15) paßt und das Isoliermaterial den zweiten Spulenkern-Abschnitt (242) formschlüssig wenigstens teilweise umgreift.

15. Verfahren nach Anspruch 14,
- bei dem vor dem Einfüllen des verflüssigten Isoliermaterials eine zylindrische erste Spule (21) auf dem ersten Spulenkern (23) und eine zylindrische zweite Spule (22) auf dem zweiten Spulenkern (24) angeordnet werden und
- bei dem zum gießdichten Verschließen der ersten und der zweiten Mantel-Öffnung (113, 114) Gießverschlüsse (515, 516) verwendet werden, in die jeweils einer der Spulenkerne (23, 24) mit jeweils einer Spule (21) bzw. (22) temporär eingesetzt ist,
- wobei der erste Spulenkern (23) mit der ersten Spule (21) so geformt und in den ersten Gießverschluß (515) so eingesetzt ist, daß nach dem Erstarrenlassen die erste Spule (21) in das Isoliermaterial eingebettet ist und
- wobei der zweite Spulenkern (24) mit der zweiten Spule (22) so geformt und in den zweiten Gießverschluß (516) so eingesetzt ist, daß nach dem Erstarrenlassen die zweite Spule (22) in das Isoliermaterial eingebettet ist.

16. Verfahren nach einem der Ansprüche 1 bis 15,
- bei dem das Trägerrohr (11) vor dem Einsetzen des ersten Sinter-Dorns (411) mit einer dritten Mantel-Öffnung (115) für das Einsetzen einer ersten Elektrode (31) und mit einer vierten Mantel-Öffnung (116) für das Einsetzen einer zweiten Elektrode (32) versehen wird und
- bei dem nach dem Einsetzen des ersten Sinter-Dorns (411) die dritte Mantel-Öffnung (115) mittels eines dritten Sinterverschlusses (417) und die vierte Mantel-Öffnung (116) mittels eines vierten Sinterverschlusses (418) jeweils sinterdicht temporär verschlossen werden.

17. Verfahren nach Anspruch 16, bei dem zum sinterdichten Verschließen der dritten und vierten Mantel-Öffnung (115, 116) Sinterverschlüsse (417, 418) verwendet werden, die so geformt und bemessen sind, daß beide Sinterverschlüsse (417, 418) beim Sintern in das Lumen des Trägerrohrs (11) hineinragen.

18. Verfahren nach Anspruch 17, bei dem zum sinterdichten Verschließen der dritten und vierten Mantel-Öffnungen (115, 116) Sinterverschlüsse (417, 418) verwendet werden, die so geformt und bemessen sind, daß beide Sinterverschlüsse (417, 418) beim Sintern jeweils bis zum ersten Sinter-Dorn (411) reichen.

19. Verfahren nach Anspruch 17 oder 18, bei dem vor dem Einfüllen des verflüssigten Isoliermaterials die dritte Mantel-Öffnung (115) mittels eines dritten Gießverschlusses (517) und die vierte Mantel-Öffnung (116) mittels eines vierten Gießverschlusses (517) jeweils gießdicht so temporär verschlossen werden, daß das Isoliermaterial die beiden Mantel-Öffnungen (115, 116) nach dem Erstarrenlassen wenigstens teilweise ausfüllt.

20. Verfahren nach Anspruch 19, bei dem zum gießdichten Verschließen der dritten und vierten Mantel-Öffnung (115, 116) Gießverschlüsse (517, 518) verwendet werden, in die jeweils eine der Elektroden (31, 32) temporär eingesetzt ist,
- wobei die erste Elektrode (31) so ausgeformt und in den dritten Gießverschluß (517) so eingesetzt ist, daß nach dem Erstarrenlassen die erste Elektrode (31) in den Liner (12) eingepaßt ist und das Isoliermaterial diese abschnittsweise formschlüssig umgreift und
- wobei die zweite Elektrode (32) so ausgeformt und in den vierten Gießverschluß (518) so eingesetzt ist, daß nach dem Erstarrenlassen die zweite Elektrode (32) in den Liner (12) eingepaßt ist und das Isoliermaterial diese abschnittsweise formschlüssig umgreift.

21. Verfahren nach einem der Ansprüche 1 bis 20, bei dem ein Trägerrohr (11) aus Edelstahl verwendet wird.

22. Verfahren nach einem der Ansprüche 1 bis 21, bei dem als erstes Sinterausgangsmaterial Sinterbronze verwendet wird.

23. Verfahren nach einem der Ansprüche 1 bis 22, bei dem als Isoliermaterial Polyfluorcarbon verwendet wird.

24. Verfahren nach einem der Ansprüche 1 bis 23, bei dem das Einfüllen und Erstarrenlassen des Isoliermaterials durch ein Transfer-Mold-Verfahren, ein Compression-Mold-Verfahren oder ein Injection-Mold-Verfahren erfolgt.

## Claims

1. Process for manufacturing a measuring tube (1), exhibiting a first open end on the inlet side and a second open end on the outlet side, for an electromagnetic flow sensor where the measuring tube (1) comprises:
- a non-ferromagnetic support tube (11)
- a tubular liner (12) made out of insulating material and accommodated in a lumen of the support tube (11)
- an open-pore reinforcing body (13) embedded in the liner (12)
where the process involves the following steps:
- the support tube (11) is prefabricated
- a first sintering space (41) is formed in the lumen of the support tube (11) in that
-- a first sintering mandrel (411), of minimum diameter and greater than the minimum width of the liner, is inserted into the lumen of the support tube (11) and temporarily fixed in place there and
-- the support tube (11) is sealed in a sinter-tight manner, leaving at least one first fill aperture (414) for a granular first material to be sintered
- the reinforcing body (13) is formed directly in the lumen of the support tube (11) in that
-- the first material to be sintered is introduced into the first sintering space (41)
-- the first material to be sintered is sintered in the sintering space (41) and
-- the first sintering mandrel (411) is removed
- a casting space (51) is formed in the lumen of the support tube (11) in that
-- a casting mandrel (511) of minimum diameter, which is at maximum the same as the minimum diameter of the liner (12), is temporarily fixed in the lumen of the support tube (11) and
-- the support tube (11) is sealed in a cast-tight manner, leaving at least one casting aperture (514) for a liquefied insulating material and
- the liner (12) is formed directly in the lumen of the support tube (11) in that the liquefied insulating material
-- is introduced into the casting space (51)
-- is allowed penetrate the reinforcing body (13)
-- is allowed solidify in the lumen of the support tube (11).

2. Process as per Claim 1 where
- a second sintering mandrel (421) of minimum diameter and greater than the minimum width of the liner (12) is inserted into the lumen of the support tube (11) after sintering the reinforcing body (13) and before inserting the first casting mandrel (511) and is fixed here temporarily in such a way that a second sintering space (42) is formed.
- the support tube (11) is sealed in a sinter-tight manner, leaving at least one fill aperture for a granular second material to be sintered
- the second material to be sintered is introduced into the second sintering space (42)
- the second material to be sintered is sintered and thus the reinforcing body (13) in the lumen of the support tube (11) is at least increased in sections and
- the second sintering mandrel (421) is replaced by the casting mandrel (511).

3. Process as per Claim 1 or 2 where
- before inserting the first sintering mandrel (411)
-- a first expanded portion (111) is created at the front in the first end of the support tube (11) on the inlet side and
-- a second expanded portion (112) is created at the front in the second end of the support tube (12) on the outlet side and
- the support tube (11) is sealed in such a way before the first material to be sintered is introduced that the reinforcing body (13) at least partially fills the first and second expanded portion (111, 112) after sintering.

4. Process as per Claim 3 where the first and second expanded portions (111, 112) are tapered towards the inside.

5. Process as per one of the Claims 1 to 3 where,
- prior to inserting the first sintering mandrel (411), the support tube (11)
-- is provided with a first wall opening (113) for inserting a first ferromagnetic coil core (23) exhibiting a first face (231) at the end and
-- is provided with a second wall opening (114) for inserting a second ferromagnetic coil core (24) exhibiting a second face (241) at the end
- the first wall opening (113) is temporarily sealed in a sinter-tight manner with a first sintering closure (415) and the second wall opening (114) is temporary sealed in a sinter-tight manner with a second sintering closure (416) before the first material to be sintered is introduced into the first sintering space (41).

6. Process as per Claim 5 where sintering closures (415, 416) are used to seal the first and second wall opening (113, 114) in a sinter-tight manner and these plugs are formed in such a way that the reinforcing body (13) at least partially fills both wall openings (113, 114) after sintering.

7. Process as per Claim 5 or 6 where sintering closures (415, 416) are used to seal the first and second wall opening (113, 114) in a sinter-tight manner and these plugs are formed in such a way that after sintering
- a first coil core seat (14) - starting from the first wall opening (113) - is formed in
the reinforcing body (13) for inserting a first coil core section (232) starting from first
face (231) of the first coil core (23)
- a second coil core seat (15) - starting from the second wall opening (114) - is formed in the reinforcing body (13) for inserting a second coil core section (242) starting from the second face (241) of the second coil core (24)

8. Process as per Claim 7 where sintering closures (415, 416) are used to seal the first and second wall opening (113, 114) in a sinter-tight manner into which one of the coil cores (23, 24) is temporarily inserted
- whereby the first coil core (23) is formed in such a way and inserted into the first sintering closure (415) in such a way that, after sintering, the first coil core (23) fits into the first coil core seat (14) and this at least partially encompasses the first coil core section (232) with positive locking and
- whereby the second coil core (24) is formed in such a way and inserted into the second sintering closure (416) in such a way that, after sintering, the second coil core (24) fits into the second coil core seat (15) and this at least partially encompasses the second coil core section (242) with positive locking.

9. Process as per Claim 7 or 8 where coil cores (23, 24) are used that have curved end faces (231, 241) at least in part.

10. Process as per one of the Claims 7 to 9 where coil cores (23, 24) with coil core sections (232, 242) at the end are used which are designed as a first or a second pole shoe.

11. Process as per one of the Claims 7 to 10 where coil cores (23, 24) with sintered coil core sections (232, 242) at the end are used.

12. Process as per one of the Claims 5 to 11 where, prior to introducing the liquefied insulating material into the casting space (51), the first wall opening (113) is temporarily sealed cast-tight using a first casting plug (515) and the second wall opening (114) is temporarily sealed casting-tight using a second casting plug (516) in such a way that the insulating material fills the two wall openings (113, 114) at least in part.

13. Process as per Claim 12 where casting plugs (515, 516) are used to seal the first and second wall opening (113, 114) in a cast-tight manner and these plugs are formed in such a way that the first and second coil core seat (14, 15) for inserting the coil cores (23, 24) are formed in the liner (12) once the insulating material has solidified.

14. Process as per Claim 12 or 13 where casting plugs (515, 516) are used to seal the first and second wall opening (113, 114) in a cast-tight manner where one of the coil cores (23, 24) is inserted temporarily into each of the plugs
- where the first coil core (23) is formed in such a way and inserted into the first casting plug (515) in such a way that the first coil core (23) fits into the first coil core seat (14) after the solidifying phase and the insulating material at least partially encompasses the first coil core section (232) with positive locking
- where the second coil core (24) is formed in such a way and inserted into the second casting plug (516) in such a way that the second coil core (24) fits into the second coil core seat (15) after the solidifying phase and the insulating material at least partially encompasses the second coil core section (242) with positive locking.

15. Process as per Claim 14 where
- a cylindrical first coil (21) is arranged on the first coil core (23) and a cylindrical second
coil (22) is arranged on the second coil core (24) before the liquefied insulating material
is introduced
- casting plugs (515, 516) are used to seal the first and second wall opening (113,114)
in a cast-tight manner and one of the coil cores (23, 24) with one of the coils (21) or (22)
is inserted temporarily into each of the plugs
- whereby the first coil core (23) with the first coil (21) is shaped in such a way and
inserted into the first casting plug (515) in such a way that the first coil (21) is embedded into the insulating material after the solidifying phase and
- whereby the second coil core (24) with the second coil (22) is shaped in such a way and
inserted into the second casting plug (516) in such a way that the second coil (22) is
embedded into the insulating material after the solidifying phase.

16. Process as per one of the Claims 1 to 15
- where the support tube (11) is provided with a third wall opening (115) for inserting a first electrode (31) and provided with a fourth wall opening (116) for inserting a second electrode (32) before the first sintering mandrel (411) is inserted and
- where, after inserting the first sintering mandrel (411), the third wall opening (115) is temporarily sealed in a sinter-tight manner with a third sintering closure (417) and the fourth wall opening (116) is temporarily sealed in a sinter-tight manner with a fourth sintering closure (418).

17. Process as per Claim 16 where sintering closures (417, 418) are used to seal the third and fourth wall openings (115, 116) in a sinter-tight manner and these plugs have such a specific shape and size that both sintering closures (417, 418) project into the lumen of the support tube (11) during sintering.

18. Process as per Claim 17 where sintering closures (417, 418) are used to seal the third and fourth wall openings (115, 116) in a sinter-tight manner and these plugs have such a specific shape and size that both sintering closures (417, 418) extend to the first sinter mandrel (411) during sintering.

19. Process as per Claim 17 or 18 where, prior to introducing the liquefied insulating material, the third wall opening (115) is temporarily sealed in a casting-tight manner using a third casting plug (517) and the fourth wall opening (116) is temporarily sealed in a casting-tight manner using a fourth casting plug (517) in such a way that the insulating material at least partially fills the two wall openings (115, 116) after the solidifying phase.

20. Process as per Claim 19 where casting plugs (517, 518) are used to seal the third and fourth wall openings (115, 116) in a casting-tight manner and one of the electrodes (31, 32) is temporarily inserted into each of the plugs
- where the first electrode (31) is formed in such a way and inserted into the third casting plug (517) in such a way that, after solidifying, the first electrode (31) is fitted into the liner (12) and the insulating material encompasses this electrode in sections with positive locking and
- where the second electrode (32) is formed in such a way and inserted into the fourth casting plug (518) in such a way that, after solidifying, the second electrode (32) is fitted into the liner (12) and the insulating material encompasses this electrode in sections with positive locking.

21. Process as per one of the Claims 1 to 20 where a stainless steel support tube (11) is used.

22. Process as per one of the Claims 1 to 21 where sintered bronze is used as the first material to be sintered.

23. Process as per one of the Claims 1 to 22 where polyfluorocarbon is used as the insulating material.

24. Process as per one of the Claims 1 to 23 where the insulating material is introduced and allowed to solidify using a transfer molding process, a compression molding process or an injection molding process.

## Revendications

1. Procédé destiné à la fabrication d'un tube de mesure (1) présentant, côté entrée, une première extrémité ouverte et, côté sortie, une deuxième extrémité ouverte, pour un débitmètre magnéto-inductif, lequel tube de mesure (1) comprend :
- un tube-support (11) non ferromagnétique,
- une enveloppe (12) tubulaire constituée d'un matériau isolant, logée dans un canal intérieur du tube-support (11) et
- un corps d'appui (13) à pores ouverts, encastré dans l'enveloppe (12),
lequel procédé comprend les étapes suivantes :
- le tube-support (11) est préfabriqué,
- une première zone de frittage (41) est formée dans le canal intérieur du tube-support (11) en ce que
-- une première broche de frittage (411) d'un diamètre minimal supérieur à un diamètre intérieur minimal de l'enveloppe (12) est introduit dans le canal intérieur du tube-support (11) et y est fixé temporairement et
-- le tube-support (11) est obturé, jusqu'à au moins une première ouverture de remplissage (414), de façon étanche au frittage pour une première matière première de frittage granuleuse,
- le corps d'appui (13) est formé, selon une forme adaptée, directement dans le canal intérieur du tube-support (11) en ce que
-- la première matière première de frittage est remplie dans la première zone de frittage (41)
-- la première matière première de frittage est frittée dans la zone de frittage (41) et
-- la première broche de frittage (411) est retirée,
- une zone de coulée (51) est formée dans le canal intérieur du tube-support (11) en ce que
-- une broche de coulée (511) d'un diamètre minimal, qui est au maximum égal au diamètre intérieur minimal de l'enveloppe (12), est fixée temporairement dans le canal intérieur du tube-support (11) et
-- le tube-support (11) est obturé, jusqu'à au moins une ouverture de coulage (514), de façon étanche au coulage pour un matériau isolant fluidifié, et
- l'enveloppe (12) est formée directement dans le canal intérieur du tube-support (11) en ce que le matériau isolant fluidifié
-- est rempli dans la zone de coulée (51),
-- pénètre dans le corps d'appui (13) et
-- est solidifié dans le canal intérieur du tube-support (11).

2. Procédé selon la revendication 1,
- pour lequel après le frittage du corps d'appui (13) et avant l'introduction de la première broche de coulée (511), une deuxième broche de frittage (421) d'un diamètre minimal supérieur au diamètre intérieur minimal de l'enveloppe (12) est introduite dans le canal intérieur du tube-support (11) et y est fixée temporairement de telle manière à former une deuxième zone de frittage (42),
- le tube-support (11) est obturé, jusqu'à au moins une ouverture de remplissage, de façon étanche au frittage pour une deuxième matière première de frittage granuleuse,
- la deuxième matière première de frittage est frittée et, de cette manière, le corps d'appui (13) est agrandi au moins partiellement dans le canal intérieur du tube-support (11), et
- la deuxième broche de frittage (421) est remplacée par la broche de coulée (511).

3. Procédé selon la revendication 1 ou 2,
- pour lequel est réalisé, avant l'introduction de la première broche de frittage (411),
-- un premier élargissement (111) en partie frontale dans la première extrémité, côté entrée, du tube-support (11) et
-- un deuxième élargissement (112) en partie frontale dans la deuxième extrémité, côté sortie, du tube-support (11), et
- pour lequel le tube support (11) est obturé, avant le remplissage de la première matière première de frittage, de telle manière qu'après le frittage, le corps d'appui (13) remplisse au moins partiellement le premier et le deuxième élargissement (111, 112).

4. Procédé selon la revendication 3, pour lequel le premier et le deuxième élargissement (111, 112) sont réalisés en forme de cône, dont la section décroît vers l'intérieur.

5. Procédé selon l'une des revendications 1 à 3,
- pour lequel, avant l'introduction de la première broche de frittage (411), le tube-support (11) est muni
-- d'une première ouverture latérale (113) pour l'introduction d'un premier noyau de bobine (23) ferromagnétique présentant en son extrémité une première face frontale (231), et
-- d'une deuxième ouverture latérale (114) pour l'introduction d'un deuxième noyau de bobine (24) ferromagnétique présentant en son extrémité une deuxième face frontale (241), et
- pour lequel, avant le remplissage de la première matière première de frittage dans la première zone de frittage (41), sont obturées temporairement, de façon étanche au frittage, respectivement la première ouverture latérale (113) au moyen d'une première fermeture de frittage (415) et la deuxième ouverture latérale (114) au moyen d'une deuxième fermeture de frittage (416).

6. Procédé selon la revendication 5, pour lequel sont utilisés, pour l'obturation étanche au frittage de la première et de la deuxième ouverture latérale (113, 114), des fermetures de frittage (415, 416), qui sont formées de telle manière que le corps d'appui (13) remplisse au moins partiellement les deux ouvertures latérales (113, 114) après le frittage.

7. Procédé selon la revendication 5 ou 6, pour lequel sont utilisées, pour l'obturation étanche au frittage de la première et de la deuxième ouverture latérale (113, 114), des fermetures de frittage (415, 416), qui sont respectivement formées, de telle manière que soient formés dans le corps d'appui (113), après le frittage,
- un premier logement de noyau de bobine (14) partant de la première ouverture latérale (113), destiné à la mise en place d'une première section de noyau de bobine (232) située en extrémité et partant de la première surface frontale (231) du premier noyau de bobine (23), et
- un deuxième logement de noyau de bobine (15) partant de la deuxième ouverture latérale (114), destiné à la mise en place d'une deuxième section de noyau de bobine (242) située en extrémité et partant de la deuxième surface frontale (241) du deuxième noyau de bobine (24).

8. Procédé selon la revendication 7, pour lequel sont utilisées pour l'obturation étanche au frittage de la première et de la deuxième ouverture latérale (113, 114), des fermetures de frittage (415, 416), dans lesquelles sont introduits, temporairement, respectivement les noyaux de bobine (23, 24),
- le premier noyau de bobine (23) étant formé et introduit dans la première fermeture de frittage (415), de telle manière qu'après le frittage, le premier noyau de bobine (23) s'adapte dans le premier logement de noyau de bobine (14) et que celui-ci enveloppe au moins partiellement, sans jeu, la première section de noyau de bobine (232) et
- le deuxième noyau de bobine (24) étant formé et introduit dans la deuxième fermeture de frittage (416), de telle manière qu'après le frittage, le deuxième noyau de bobine (24) s'adapte dans le deuxième logement de noyau de bobine (15) et que celui-ci enveloppe au moins partiellement, sans jeu, la deuxième section de noyau de bobine (242).

9. Procédé selon la revendication 7 ou 8, pour lequel sont utilisés des noyaux de bobine (23, 24) avec des surfaces frontales (231, 241) au moins partiellement convexes.

10. Procédé selon l'une des revendications 7 à 9, pour lequel sont utilisés des noyaux de bobine (23, 24) avec des sections de noyau de bobine (232, 242) d'extrémité, qui sont formées respectivement en tant que premier et en tant que deuxième épanouissement polaire.

11. Procédé selon l'une des revendications 7 à 10, pour lequel sont utilisés des noyaux de bobine (23, 24) avec des sections de noyau de bobine (232, 242) d'extrémité frittées.

12. Procédé selon l'une des revendications 5 à 11, pour lequel, avant le remplissage du matériau isolant fluidifié dans la zone de coulée (51), sont obturées temporairement, de façon étanche à la coulée, respectivement la première ouverture latérale (113) au moyen d'une première fermeture de coulée (515) et la deuxième ouverture latérale (114) au moyen d'une deuxième fermeture de coulée (516), de telle manière que le matériau isolant remplisse au moins partiellement les deux ouvertures latérales (113, 114).

13. Procédé selon la revendication 12, pour lequel sont utilisées, pour l'obturation étanche à la coulée de la première et de la deuxième ouverture latérale (113, 114), des fermetures de coulée (515, 516), qui sont chacune formées de telle manière qu'après solidification du matériau isolant, le premier et le deuxième logement de noyau de bobine (14, 15) soient formés pour la mise en place des noyaux de bobine (23, 24).

14. Procédé selon la revendication 12 ou 13, pour lequel sont utilisées en vue de l'obturation étanche à la coulée de la première et de la deuxième ouverture latérale (113, 114), des fermetures de coulée (515, 516), dans lesquelles sont introduits, temporairement, respectivement les noyaux de bobine (23, 24),
- le premier noyau de bobine (23) étant formé et introduit dans la première fermeture de coulée (515), de telle manière qu'après la coulée, le premier noyau de bobine (23) s'adapte dans le premier logement de noyau de bobine (14) et que celui-ci enveloppe au moins partiellement, sans jeu, la première section de noyau de bobine (232) et
- le deuxième noyau de bobine (24) étant formé et introduit dans la deuxième fermeture de coulée (516), de telle manière qu'après la coulée, le deuxième noyau de bobine (24) s'adapte dans le deuxième logement de noyau de bobine (15) et que celui-ci enveloppe au moins partiellement, sans jeu, la deuxième section de noyau de bobine (242)

15. Procédé selon la revendication 14,
- pour lequel, avant le remplissage du matériau isolant fluidifié, sont disposées une première bobine (21) cylindrique sur le premier noyau de bobine (23) et une deuxième bobine cylindrique (22) sur le deuxième noyau de bobine (24), et
- pour lequel sont utilisées, en vue de l'obturation étanche à la coulée de la première et de la deuxième ouverture latérale (113, 114), des fermetures de coulée (515, 516), dans lesquelles est introduit, temporairement, respectivement l'un des noyaux de bobine (23, 24) avec respectivement une bobine (21) et (22),
- le premier noyau de bobine (23) avec la première bobine (21) étant formé et introduit dans la première fermeture de coulée (515), de telle manière qu'après solidification, la première bobine (21) soit encastrée dans le matériau isolant et
- le deuxième noyau de bobine (24) avec la deuxième bobine (22) étant formé et introduit dans la deuxième fermeture de coulée (516), de telle manière qu'après solidification, la deuxième bobine (22) soit encastrée dans le matériau isolant.

16. Procédé selon l'une des revendications 1 à 15,
- pour lequel le tube-support (11) est muni, avant la mise en place de la première broche de frittage (411), d'une troisième ouverture latérale (115) pour l'introduction d'une première électrode (31), et d'une quatrième ouverture latérale (116) pour l'introduction d'une deuxième électrode (32), et
- pour lequel, après la mise en place de la première broche de frittage (411), sont obturées temporairement, de façon étanche au frittage, la troisième ouverture latérale (115) au moyen d'une troisième fermeture de frittage (417) et la quatrième ouverture latérale (116) au moyen d'une quatrième fermeture de frittage (418).

17. Procédé selon la revendication 16, pour lequel sont utilisées en vue de l'obturation étanche au frittage de la troisième et de la quatrième ouverture latérale (115, 116), des fermetures de frittage (417, 418), qui sont formées et dimensionnées de telle manière que les deux fermetures de frittage (417, 418) pénètrent, après le frittage, dans le canal intérieur du tube-support (11).

18. Procédé selon la revendication 17, pour lequel sont utilisées en vue de l'obturation étanche au frittage de la troisième et de la quatrième ouverture latérale (115, 116), des fermetures de frittage (417, 418), qui sont formées et dimensionnées de telle manière que les deux fermetures de frittage (417, 418) se prolongent, après le frittage, jusqu'à la première broche de frittage (411).

19. Procédé selon la revendication 17 ou 18, pour lequel, avant le remplissage du matériau isolant fluidifié, sont obturées temporairement, de façon étanche à la coulée, respectivement la troisième ouverture latérale (115) au moyen d'une troisième fermeture de coulée (517) et la quatrième ouverture latérale (116) au moyen d'une quatrième fermeture de coulée (518), de telle manière qu'après solidification, le matériau isolant remplisse au moins partiellement les deux ouvertures latérales (115, 116).

20. Procédé selon la revendication 19, pour lequel sont utilisées, en vue de l'obturation étanche à la coulée de la troisième et de la quatrième ouverture latérale (115, 116), des fermetures de coulée (517, 518), dans lesquelles sont introduites, temporairement, respectivement les électrodes (31, 32),
- la première électrode (31) étant formée et introduite dans la troisième fermeture de coulée (517), de telle manière qu'après solidification, la première électrode (31) s'adapte dans l'enveloppe (12) et que le matériau isolant enveloppe celle-ci partiellement, sans jeu, et
- la deuxième électrode (32) étant formée et introduite dans la quatrième fermeture de coulée (518), de telle manière qu'après solidification, la deuxième électrode (32) s'adapte dans l'enveloppe (12) et que le matériau isolant enveloppe celle-ci partiellement, sans jeu.

21. Procédé selon l'une des revendications 1 à 20, pour lequel est utilisé un tube-support (11) en acier inoxydable.

22. Procédé selon l'une des revendications 1 à 21, pour lequel est utilisé du bronze fritté en tant que première matière première de frittage.

23. Procédé selon l'une des revendications 1 à 22, pour lequel est utilisé du polyfluorcarbone en tant que matériau isolant.

24. Procédé selon l'une des revendications 1 à 23, pour lequel le remplissage et la solidification du matériau isolant sont réalisés au moyen d'un procédé de moulage à transfert, d'un procédé de moulage à compression ou d'un procédé de moulage à injection.
